# EUROPÄISCHE PATENTSCHRIFT

(11) **EP 2 765 064 B1**
(45) Veröffentlichungstag und Bekanntmachung des Hinweises auf die Patenterteilung: **16.09.2015**
(21) Anmeldenummer: 13000641.4
(22) Anmeldetag: 07.02.2013
(51) Int. Cl.: B62D 35/00

(54) **Strömungsführungsvorrichtung für ein Fahrzeug sowie Fahrzeug, insbesondere LKW, LKW-Auflieger, LKW-Anhänger oder Kleintransporter**
Flow guiding device for a vehicle and vehicle, in particular an HGV, semi-trailer truck, HGV trailers or van
Dispositif de guidage d'écoulement pour un véhicule ainsi que véhicule, en particulier poids lourd, semi-remorque de poids lourd, remorque de poids lourd ou fourgonnette

(43) Veröffentlichungstag der Anmeldung: 13.08.2014
(73) Patentinhaber: Airnmotion GmbH, 52068 Aachen (DE)
(72) Erfinder: Buffo, Rainer M., 52064 Aachen (DE); Martin, Ingo, 52066 Aachen (DE); Tuxhorn, Rene, 58239 Schwerte (DE)
(74) Vertreter: Grünecker Patent- und Rechtsanwälte PartG mbB

(56) Entgegenhaltungen:
- EP-A2- 1 738 996
- DE-A1-102009 054 570
- US-A1- 2010 106 380
- US-B1- 7 862 102

## Beschreibung

Die vorliegende Erfindung betrifft eine Strömungsführungsvorrichtung für ein Fahrzeug, insbesondere für einen Lastkraftwagen oder Kleintransporter, die wenigstens einen in einer aufgerichteten Position in Konturverlängerung an einer heckseitigen Fahrzeugkante anordenbaren und eine Luftleitfläche ausbildenden Luftleitflügel umfasst, der mittels einer Verstelleinrichtung zwischen der aufgerichteten Position (Betriebsstellung) und einer eingeklappten Position (Verstaustellung) um eine Verschwenkachse verschwenkbar angeordnet ist.

Eine solche Strömungsführungsvorrichtung soll insbesondere bei einem LKW die Luftverwirbelung am Heck des LKW verbessern, sodass der Luftwiderstand des Fahrzeuges gesenkt wird. Insbesondere LKW-Auflieger bzw. LKW-Anhänger und LKW als solche in einer Pritsche-mit-Plane-Ausführung bzw. Kastenbauweise haben eine im Wesentlichen rechteckige Querschnittsform. Dabei haben die Aufbauten üblicherweise eine Kastenform, d. h. gegenüberliegende Längsseitenflächen und die Dachflächen sind in Längsrichtung, d. h. Fahrtrichtung im Wesentlichen eben, sodass sich auch in der Seitenansicht eine kastenförmige Gestaltung ergibt. Entsprechendes gilt für Container oder Tiertransporter. Auch dort ist die äußere Kontur des durch den LKW gegebenen Transportvolumens mit einem im Querschnitt rechtwinkligen Kasten umgeben. Solche Ausgestaltungen und die verbesserte Luftführung am Heck hat die vorliegende Erfindung insbesondere im Blick.

Gattungsgemäße Strömungsführungsvorrichtungen für ein Fahrzeug sind beispielsweise aus der WO 2011/019768 A2 bekannt. Bei diesem Stand der Technik werden verschwenkbare Luftleitflächen an gegenüberliegenden Seitenkanten sowie der Oberkante am Heck des LKW montiert, die händisch aufgestellt und verriegelt werden müssen. Die Schwenkachse einer dieser schwenkbaren Luftleitfläche ist dabei ortsfest und randnah zu den entsprechenden Kanten vorgesehen. Durch Verschwenken um die Schwenkachse werden die Luftleitflächen aufgerichtet, d. h. von einer Position, in der die Luftleitflächen im Wesentlichen an der Heckfläche angeschlagen sind, werden die Luftleitflächen zum Aufrichten nach außen verschwenkt, sodass sie im Wesentlichen die Deckflächen bzw. die Längsseitenflächen des Aufbaus fortführen. Die Luftleitflächen bewirken bei dem Stand der Technik gemäß WO 2011/019768 A2 eine Pyramidalstruktur, die das Heck des Laderaums überragt. Aus der US 7,854,468 ist ein ähnlicher Vorschlag bekannt. Auch dort sind verschwenkbare Luftleitflächen an den Kanten des Laderaumes am Heck vorgesehen. In einem Eckbereich zwischen den seitlichen Luftleitflächen und einer oberen Luftleitfläche ist in der Verstaustellung ein eingeschlagener Bereich vorgesehen, der in der Betriebsstellung die Seitenflächen bis in die Ecke verlängert. Ein Vorschlag ähnlich zu der WO 2011/019768 A2 ist aus der US 7,726,724 B2 bekannt. Diese Strömungsführungsvorrichtung genügt nicht den Anforderungen an die Verkehrssicherheit, da die Strömungsführungsvorrichtung nach hinten spitz zuläuft. Aus der gattungsgemäßen US 7,862,102 B1 und der gattungsgemäßen US 7,641,262 B2 sind Strömungsführungsvorrichtungen mit verschwenkbaren Flügeln bekannt.

Die aus dem Stand der Technik bekannten Lösungen gilt es zu verbessern. Sie erschweren das Öffnen der heckseitigen Türen zu dem Laderaum. Diese müssen üblicherweise nahezu vollständig an die Außenseite des Fahrzeuges angelegt werden, wenn das Fahrzeug bzw. der Auflieger oder Anhänger beladen werden soll. Mit anderen Worten müssen die Türen um etwa 260° nach außen verschwenkt werden, um das Fahrzeug zu beladen. In der Regel stehen die aus dem Stand der Technik vorbekannten Strömuhgsführungsvorrichtungen einem solchen Vorhaben entgegen, da sie sich im Bereich der Scharniere der Türen befinden.

Wie beispielsweise der aus der US 7,854,468 B2 bekannte Lösungsvorschlag belegt, hat es zwar Bemühungen gegeben, eine Strömungsführungsvorrichtung sowohl an den Seitenkanten wie auch an der Oberkante des Ladebereiches am Heck vorzusehen und hierbei auch dem Problem Rechnung zu tragen, dass im Betriebszustand ein Eckbereich von der Strömungsführungsvorrichtung nicht ausgespart werden sollte. Die vorbekannte Lösung mit einem eingeschlagenen Bereich erlaubt jedoch keine strömungsmäßig optimierte Konturierung der Luftleitflügel.

Die bekannten Lösungen zur Verbesserung des Strömungsverhaltens am Heck führen zu einer Konturform der Luftleitflügel, die aerodynamisch nicht ideal ist.

Die vorliegende Erfindung will einen Vorschlag machen, der die oben beschriebenen Probleme ganz oder teilweise ausräumt.

Die mit der vorliegenden Erfindung vorgeschlagene Lösung ist in Anspruch 1 angegeben. Die erfindungsgemäße Strömungsführungsvorrichtung unterscheidet sich dadurch von dem vorbekannten Stand der Technik, der beispielsweise durch die WO 2011/019768 A2 gebildet wird, darin, dass der Luftleitflügel wenigstens ein Luftleitelement und wenigstens ein relativ zu dem Luftleitelement parallel zu der Schwenkachse translatorisch bewegliches Schiebeelement umfasst. Jeder Luftleitflügel wird dementsprechend aus zumindest zwei Elementen gebildet, nämlich einem vorzugsweise ausschließlich verschwenkbar gelagerten Luftleitelement und einem translatorisch dazu beweglichen Schiebeelement. Es versteht sich von selbst, dass das Schiebeelement auch um die Verschwenkachse verschwenkbar ist. Allerdings kann das Schiebeelement zusätzlich translatorisch und entlang, d. h. parallel zu der Schwenkachse verschoben werden.

Die Schwenkachse der Verschwenkbewegung bei der erfindungsgemäßen Lösung, d. h. der Mittelpunkt der momentanen Schwenkbewegung des Luftleitflügels ist dabei üblicherweise nicht ortsfest vorgesehen. Vielmehr verändert sich die Lage der Schwenkachse vorzugsweise beim Aufrichten, sodass die Schwenkachse von einer nach innen versetzten Anordnung beim Aufstellen nach außen mit verschwenkt wird, um die Luftleitflügel möglichst bündig an der heckseitigen Fahrzeugkante anzuordnen.

Der Luftleitflügel der vorliegenden Erfindung ist üblicherweise auf seiner Lüftführungsseite geschlossen, d. h. der Luftleitflügel hat an seiner Luftleitfläche keine Löcher. Auch hat der Luftleitflügel üblicherweise einen glatten, stetigen Verlauf, sodass Fehlstellen und Kanten sowohl auf dem Luftleitflügel als auch am Übergang zwischen der Fahrzeugkante und dem Luftleitflügel vermieden werden können.

Die Strömungsführungsvorrichtung ist dabei vorzugsweise so ausgestaltet, dass in der Verstaustellung sich das Schiebeelement in einer Draufsicht innerhalb einer durch das Luftleitelement gebildeten Hüllfläche befindet. Die Hüllfläche wird durch die Außenkontur bei einer Draufsicht auf das Luftleitelement vorgegeben. Das Luftleitelement und das Schiebeelement sind dementsprechend übereinander angeordnet. Vorzugsweise überragen sich in der Betriebsstellung Luftleitelement und Schiebeelement zumindest teilweise oder stoßen mit ihren jeweiligen Kanten genau aneinander an, sodass die durch den Luftleitflügel gebildete Luftleitfläche durch die Überlagerung beider Elemente in Erstreckungsrichtung der Verschwenkachse verlängert ist.

Die erfindungsgemäße Strömungsführungsvorrichtung ist dabei üblicherweise so ausgestaltet, dass Luftleitflügel in der Verstaustellung die heckseitigen Fahrzeugkanten nicht überragen und auch in der Betriebsstellung die maximale Höhe von 4 m und die maximale Breite von 2,55 m, die für Lastkraftfahrzeuge vorgeschrieben sind, nicht überschritten werden.

Ein Luftleitflügel im Sinne der vorliegenden Erfindung ist vorzugsweise durch einen Luftleitflügel gebildet, der ein in sich geschlossenes Hohlprofil hat. Eine solche Ausgestaltung ist üblicherweise zumindest für das Luftleitelement zu bevorzugen. Bei einem in sich geschlossenen Hohlkörper hat dieser in einer Querschnittsansicht, d. h. einer Schnittansicht rechtwinklig zu der Schwenkachse eine üblicherweise konvex gekrümmte Außenfläche und eine gegenüberliegende Innenfläche. Die Außen- und die Innenfläche bilden vorzugsweise vordere und hintere Kanten aus, an denen die beiden Flächen im Wesentlichen spitz zulaufend miteinander verbunden sind. Der Hohlkörper kann dabei Gelenkpunkte für die gelenkige Anbindung des Luftleitflügels in sich aufnehmen, sowie eine Führung bzw. einen Aktuator für die translatorische Schiebebewegung des Schiebeelementes. Hierzu kann auch eine Kulissenführung gehören, die eine wendelförmige Nut oder dergleichen umfasst, so dass sich aufgrund einer Verschwenkbewegung des Luftleitflügels zwingend auch eine translatorische Bewegung des Schiebeelementes ergibt, und zwar aufgrund der Führung in der wendelförmigen Nut. Alternativ kann zwischen dem Luftleitelement und dem Schiebeelement eine Linearführung vorgesehen sein, welche die Schieberichtung des Schiebeelementes vorgibt und das Schiebeelement verschieblich an dem Luftleitelement führt. Zwischen dem Luftleitelement und dem Schiebeelement ist üblicherweise ein Aktuator vorgesehen, der die translatorische Bewegung des Schiebeelementes stellt.

Die Aktuatoren bilden vorzugsweise die zuvor erwähnte Verstelleinrichtung. Es empfiehlt sich die Verwendung von pneumatischen Aktuatoren. Im Falle von einfach wirkenden pneumatischen Zylindern werden diese bei Druckbeaufschlagung üblicherweise den Luftleitflügel von der Verstaustellung in die Betriebsstellung hochstellen. Dies kann gegen die Kraft einer Rückstellfeder erfolgen, so dass der pneumatische Aktuator in seiner Ausgangsstellung, die der Verstaustellung zugeordnet ist, zurückgestellt wird, wenn der Aktuator nicht mit Innendruck beaufschlagt ist. Die Rückstellung kann auch über die Gewichtskraft erfolgen, insbesondere dann, wenn der Aktuator einem oberseitigen Luftflügel zugeordnet ist, mit dem die Strömung in Verlängerung des Fahrzeugdaches und am Heck des Fahrzeugs günstig beeinflusst werden soll.

Alternativ oder ergänzend können die Aktuatoren auch doppeltwirkende Zylinder sein, so dass der Leitflügel mit den Aktuatoren sowohl aktiv von der Betriebsstellung in die Verstaustellung zurückgebracht wie auch von der Verstaustellung in die Betriebsstellung aufgestellt werden kann. Die obigen Erläuterungen für die Aktuatoren gelten sowohl für denjenigen Aktuator, der das Luftleitelement verschwenkt, wie auch einen eventuell zusätzlich vorgesehenen Aktuator zur translatorischen Bewegung des Schiebeelementes.

Weiterhin sind Druckluftleitungen zu den Aktuatoren vorzugsweise innerhalb des Hohlkörpers vorgesehen. Dadurch ergibt sich ein optisch ansprechendes Bild der erfindungsgemäßen Strömungsführungsvorrichtung.

Gemäß einer bevorzugten Weiterbildung der vorliegenden Erfindung hat die Strömungsführungsvorrichtung zwei seitliche Luftleitflügel zur Strömungsführung an gegenüberliegenden Seitenflächen des Fahrzeugs und einen oberseitigen Luftleitflügel zur Strömungsführung an einer Dachfläche des Fahrzeugs. Der oberseitige Luftleitflügel hat dabei vorzugsweise zumindest zwei Luftleitelemente und zumindest zwei Schiebeelemente.

Soweit im Rahmen dieser Anmeldung auf "oben" bzw. "unten" sowie "außen" und "innen" Bezug genommen wird, erfolgt dies mit Rücksicht darauf, dass die Strömungsführungsvorrichtung zwar für sich unter Schutz gestellt werden soll, allerdings im Anwendungsfall an einem LKW montiert ist. Die zuvor beschriebene bevorzugte Ausgestaltung wird dementsprechend nach Art eines nach unten offenen U an dem Fahrzeug montiert. Damit soll nicht gesagt sein, dass nicht auch ein unterseitiger Abschluss vorhanden sein kann, der die Strömungsführung derjenigen Luft verbessert, die unter dem Fahrzeug strömt. Als "oben" wird derjenige Bereich bezeichnet, an dem die seitlichen Luftleitflügel jeweils mit dem oberseitigen Luftleitflügel zumindest in der Betriebsstellung einen Eckbereich der Strömungsführungsvorrichtung ausbilden. Im Betriebszustand können sich die Luftleitflügel aufgrund der translatorischen Beweglichkeit des Schiebeelementes berühren, gegeneinander anstoßen oder gar form- oder kraftschlüssig miteinander verbunden sein, so dass sich eine die Luftströmung begünstigende Ausgestaltung auch in den Eckbereichen ergibt. Aber auch in der Verstaustellung kann ein seitlicher Leitflügel zusammen mit dem oberseitigen Leitflügel einen geschlossenen Eckbereich ausbilden. In dieser Verstaustellung liegen vorzugsweise die Luftleitelemente unmittelbar benachbart zueinander. Sie können vorzugsweise einander linienförmig berühren, so dass sich auch in der Verstaustellung durch die beiden seitlichen Luftleitflügel und den oberseitigen Luftleitflügel eine im Wesentlichen geschlossene, lückenfreie U-förmige Fläche ergibt, die durch die Außenfläche der Luftleitflügel gebildet ist. Unten" befindet sich regelmäßig ein freies Ende der seitlichen Luftleitflügel; dieses Ende liegt dem oberseitigen Luftleitflügel gegenüber.

Gemäß einer bevorzugten Weiterbildung der vorliegenden Erfindung ist jeder der seitlichen Luftleitflügel über einen Schwenkachskörper anhebbar. Der Schwenkachskörper ist dabei in einer mit einer wendelförmigen Nut versehenen Hülse aufgenommen. Diese Hülse wird von einer Gelenkstange durchragt, die sowohl mit dem Schwenkkörper als auch mit dem zugeordneten Luftleitflügel verbunden ist. Der Schwenkachse ist üblicherweise ein Aktuator zugeordnet, der die Schwenkachse in Achsrichtung translatorisch verstellen kann. Infolge dieser Stellbewegung wandert die Gelenkstange entlang der wendelförmigen Nut in Axialrichtung und wird dabei zwangsläufig auch radial durch die wendelförmige Nut geführt, sodass der zugeordnete Luftleitflügel angehoben und gleichzeitig verschwenkt wird. Zu dieser konkreten Ausgestaltung sind Abwandlungen möglich. So kann der Schwenkachskörper auch mit einem Außengewinde versehen sein, welches im Gewindeeingriff mit einer mit der Gelenkstange verbundenen Gewindehülse ist. Auch hierdurch ist die zuvor beschriebene Kinematik (Heben und Verschwenken des Gelenkpunktes) möglich. Die zuvor beschriebene Weiterbildung ist für sich Erfindung und kann auch ohne die Merkmale von Anspruch 1 gelten. Die beschriebene Ausgestaltung bietet eine einfache und effektive Möglichkeit zum Anheben und gleichzeitigen Verschwenken des Luftleitflügels, um diesen in der Verstaustellung abgesenkt und eingeschwenkt innerhalb der Hüllfläche des Hecks eines LKW anzuordnen und ausgeschwenkt bis zu dem oberen Heckbereich hochzufahren.

Gemäß einer bevorzugten Weiterbildung der vorliegenden Erfindung ist der oberseitige Luftleitflügel gegenüber einer Höhenachse geteilt und spiegelsymmetrisch hierzu ausgebildet. Die "Mitte" und damit der innere Bereich der Strömungsführungsvorrichtung wird dementsprechend vorzugsweise durch die Höhenachse vorgegeben, welche einer Achse entspricht, die rechtwinklig zu der Fahrzeuglängsrichtung verläuft und sich in der Vertikalen erstreckt. Diese Höhenachse bildet vorzugsweise die Lage der Symmetrieebene für die gesamte Strömungsführungsvorrichtung. Diese wird dementsprechend vorzugsweise durch zwei L-förmige Segmente gebildet, die für sich unabhängig voneinander als bauliche Einheiten ausgestaltet und an dem Fahrzeug montierbar sind. Die zuvor erwähnte Höhenachse liegt vorzugsweise auch in einer Ebene, welche durch die Anlagefläche einer Montageplatte gebildet wird, auf der der Luftleitflügel verschwenkbar und mit mindestens einem Aktuator montiert ist. Diese Montageplatte dient der Ausbildung einer vormontierten Baueinheit, die einfach an einem Fahrzeug montiert werden kann, so dass sich die Strömungsführungsvorrichtung mit dieser bevorzugten Weiterbildung auch einfach als Nachrüstsatz an einem bestehenden Fahrzeug montieren lässt. Die Montageplatte trägt dabei vorzugsweise von der Anlagefläche nach außen abragende, in der Querschnittsansicht konturierte Endkappen, die in der Verstaustellung zusammen mit der Außenfläche des Luftleitflügels eine in sich geschlossene Hüllfläche bilden. In der Verstaustellung sind dementsprechend die Aktuatoren, Gelenke sowie Gelenkstäbe randseitig eingeschlossen und damit eingehüllt. Es ergibt sich ein ästhetisch ansprechendes Bild, so dass die Strömungsführungseinrichtung auch in der Verstaustellung als Werbefläche genutzt werden kann. Dabei kann sich ein unterschiedliches Bild ergeben, abhängig davon, ob sich die Strömungsführungsvorrichtung in der Verstaustellung oder der Betriebsstellung befindet. So können Werbegestaltungen des Luftleitelementes, die in der Verstaustellung von dem Schiebeelement verdeckt sind, zusammen mit dem Schiebeelement in der Betriebsstellung eine ästhetische Gestaltung und/oder Werbebotschaft wiedergeben.

Darüber hinaus ist die Mechanik der Strömungsführungseinrichtung in der Verstaustellung geschützt.

Wie bereits zuvor erwähnt, bilden in der Betriebsstellung benachbart zueinander angeordnete Schiebeelemente einen Eckbereich aus. Dieser Eckbereich wird dabei üblicherweise durch zwei Schiebeelemente gebildet. Ein Schiebeelement ist dem seitlichen Luftleitflügel zugeordnet, das andere Schiebeelement dem oberseitigen Luftleitflügel. Diese beiden Schiebeelemente können in der Betriebsstellung kraft- und/oder formschlüssig miteinander verbunden sein, so dass eine relative Beweglichkeit der Luftleitflächen in der Betriebsstellung unterbunden wird. Dabei ist insbesondere an eine Ausgestaltung gedacht, die jegliches Klappern oder Schlagen in der Betriebsstellung in der Reisegeschwindigkeit der hier in Regel fahrenden Fahrzeuge unterbindet. Hierzu können die aneinander liegenden Kanten der Schiebeelemente auch mit stoßdämpfenden Materialien belegt sein, beispielsweise mit einer Gummilippe oder dergleichen.

Gemäß einer bevorzugten Weiterbildung der vorliegenden Erfindung umfasst die Verstelleinrichtung wenigstens ein Gliedergetriebe, das derart ausgebildet ist, dass eine vordere Kante des seitlichen Luftleitflügels oder des oberen Luftleitflügels in der Verstaustellung gegenüber der Betriebsstellung nach innen versetzt angeordnet ist. Dabei ist das Gliedergetriebe vorzugsweise so ausgebildet, dass nach Montage der Strömungsführungsvorrichtung an dem Heck des Fahrzeuges die vordere Kante in der Betriebsstellung in Konturverlängerung bündig an die heckseitige Fahrzeugkante anschließt. Jedenfalls ergibt sich aufgrund der Ausgestaltung des Gliedertriebes sowohl eine translatorische als auch eine rotatorische Bewegung des Luftleitflügels insgesamt beim Verschwenken. Das Luftleitelement wird dabei vorzugsweise um zwei entfernt voneinander liegende fahrzeugseitige Gelenkpunkte verschwenkt. Diese fahrzeugseitigen Gelenkpunkte können auch auf der Montageplatte vorgesehen sein. Die flügelseitigen Gelenkpunkte sind mit Blick auf die gewünschte Rückstellung des Luftleitflügels in die Verstaustellung möglichst weit voneinander entfernt, vorzugsweise um zumindest die halbe Länge des Luftleitflügels. Dabei kann ein flügelseitiger Gelenkpunkt an oder nahe der hinteren Kante des Flügels und außerhalb des geschlossenen Hohlkörpers angeordnet sein, da dort die Außenfläche und die Innenfläche bereits so spitz zulaufend ausgebildet sind, dass der flügelseitige Gelenkpunkt keine Aufnahme mehr in dem Hohlkörper findet.

Insbesondere aufgrund der konvexen Krümmung der Außenfläche wird mit der vorliegenden Erfindung eine günstige Strömungsbeeinflussung an der Heckkante des Fahrzeuges bewirkt. Diese Wirkung wird durch die in den Ansprüchen 8 bis 19 angegebenen Weiterbildungen zu der Flügelgeometrie weiter begünstigt. Zur Erläuterung dieser Unteransprüche wird auf die nachfolgende spezielle Beschreibung verwiesen.

Die erfindungsgemäße Strömungsführungsvorrichtung hat des Weiteren vorzugsweise eine Steuereinheit, die Mittel zum Bestimmen der Geschwindigkeit des Fahrzeugs und ein Mittel zum Generieren von Steuerwerten zum Ansteuern der Verstelleinrichtung umfasst. Durch diese Steuerwerte werden die Luftleitflügel von der Verstaustellung in die Betriebsstellung oder von der Betriebsstellung in die Verstaustellung durch Betätigung der Aktuatoren verbracht. Die Mittel zum Generieren von Steuerwerten sind dabei derart ausgebildet, dass die Steuereinheit nach Überschreiten einer ersten Grenzgeschwindigkeit ein den Luftleitflügel von der Verstaustellung in die Betriebsstellung stellendes Aufstellsignal absetzt und beim Unterschreiten einer zweiten Grenzgeschwindigkeit ein den Luftleitflügel von der Betriebsstellung in die Verstaustellung stellendes Verstausignal absetzt. Die erste Grenzgeschwindigkeit kann dabei identisch zu der zweiten Grenzgeschwindigkeit gewählt werden. Damit ist eine geschwindigkeitsabhängige Regelung der Strömungsführungsvorrichtung möglich. Diese erfolgt automatisiert und aufgrund des Geschwindigkeitssignals.

Das Geschwindigkeitssignal kann beispielsweise durch einen GPS-Sensor erfasst werden. Dieser kann entweder die Relativgeschwindigkeit ermitteln oder aber der Steuerung die Topologie mitteilen. So ist es möglich, über einen GPS-Sensor Autobahnen und Schnellstraßen zu identifizieren, zu denen die Steuereinheit das Absetzen eines Aufstellsignals freigibt, wenn das Fahrzeug in diese Straßen einfährt. Damit wird erreicht, dass die erfindungsgemäße Strömungsführungsvorrichtung nur auf Schnellstraßen und Autobahnen ausgefahren wird, ansonsten aber in der Verstaustellung verbleibt, auch dann, wenn kurzfristig höhere Geschwindigkeiten erreicht werden. Diese Freigabe eines Aufstellsignals durch die Steuereinheit kann ergänzt werden durch ein weiteres Geschwindigkeitssignal. Das Geschwindigkeitssignal kann fahrzeugseits vorliegen. Auch kann das Geschwindigkeitssignal an einer Schnittstelle abgegriffen werden, die ohnehin an einem Anhänger bzw. Auflieger gegeben ist. Diese Schnittstelle befindet sich an einer Steuereinheit, die auch an einem separaten Auflieger oder Anhänger vorgesehen sein kann und die andere Aufgaben, wie ABS, Luftfederungssteuerung und dergleichen übernimmt. An dieser Steuereinheit lassen sich diverse Signale abgreifen, so u. a. auch ein die Geschwindigkeit des Fahrzeuges wiedergebendes Signal. Dessen Druckluftsystem kann im Übrigen genutzt werden, um pneumatische Aktuatoren der Strömungsführungsvorrichtung zu betätigen.

Vorzugsweise hat die Steuereinheit ein Verzögerungsmodul, welches das Absetzen eines Aufstell- bzw. Verstausignals über einen vorbestimmten Zeitraum unterbindet, sofern während des Zeitraums die erste Grenzgeschwindigkeit unterschritten bzw. die zweite Grenzgeschwindigkeit überschritten wird. Der Zeitraum erstreckt sich dabei vorzugsweise über mehrere Sekunden, beispielsweise 2 bis 60 Sekunden. Wird innerhalb dieses Zeitintervalls beispielsweise die erste Grenzgeschwindigkeit erneut unterschritten, wird kein Aufstellsignal abgesetzt und das Aufstellen der Luftleitflügel unterbleibt. Verzögert bei hoher Geschwindigkeit und bei Luftleitflügeln in der Betriebsstellung das Fahrzeug unter die zweite Grenzgeschwindigkeit, beschleunigt danach aber innerhalb des vorbestimmten Zeitraums erneut, so dass die zweite Grenzgeschwindigkeit wieder überschritten wird, unterbleibt auch das Verstaustellsignal, so dass die Luftleitflügel in der Betriebsstellung verbleiben, auch wenn kurzfristig die zweite Grenzgeschwindigkeit unterschritten worden ist. Mit dieser Steuerung wird verhindert, dass die Luftleitflügel nur kurzfristig von der Verstaustellung in die Betriebsstellung und vice versa gestellt werden.

Mit der vorliegenden Erfindung wird ferner ein Fahrzeug unter Schutz gestellt. Hierbei handelt es sich insbesondere um einen LKW, einen LKW-Auflieger, einen LKW-Anhänger oder Kleintransporter, vorzugsweise in der bereits einleitend erwähnten Bauweise als Pritsche mit Plane, geschlossener Kasten, Container- oder Tiertransporter. Das Fahrzeug ist gekennzeichnet durch eine Strömungsführungsvorrichtung nach einem der Ansprüche 1 bis 22. In der Betriebsstellung ist der Luftleitflügel im Wesentlichen konturverlängernd zu einer heckseitigen Fahrzeugkante angeordnet, d. h. bewirkt mit seiner Außenfläche eine zunächst tangential an die Außenfläche des Fahrzeuges angenäherte Kontur, die regelmäßig heckseitig an dem Fahrzeug anliegt. Die Außenfläche des Flügels ist in der Betriebsstellung konvex gekrümmt nach innen gerichtet, so dass sich eine Begünstigung der Strömung ergibt. Die Luftströmung wird über die Außenfläche des Luftleitflügels nach innen geleitet, im Wesentlichen ohne von der Außenfläche abzureißen.

Gemäß einer bevorzugten Weiterbildung ragen von der Außenfläche des Fahrzeuges in Längsrichtung der vorderen Kante des Luftleitflügels hintereinander angeordnete Vorsprünge ab. Diese Vorsprünge sind der vorderen Kante des Luftleitflügels in der Betriebsstellung vorgelagert. Die Vorsprünge können auf der Dachfläche oder einer Seitenfläche des Fahrzeuges vorgesehen sein und von dieser abragen. Die Vorsprünge sind dabei vorzugsweise nach Art von Beulen oder Buckeln, d. h. Ausgestaltungen mit im Wesentlichen konvexer Form, insbesondere sphärisch ausgestaltet nach Art von Halbkugeln oder Ellipsoiden gebildet. Die Vorsprünge können von einer Leiste abragen und damit verbunden sein, die in eine an der Hinterkante des Fahrzeuges baubedingt vorgesehenen Nut aufgenommen ist, derart, dass die Vorsprünge die Außenfläche des Fahrzeuges überragen. Alternativ können die Vorsprünge auch geschwindigkeitsabhängig ausgebildet sein, beispielsweise durch eine in Längsrichtung konturierte Leiste aus einem elastischen Material, deren befestigungsseitiges Ende in Strömungsrichtung hinten und deren freies Ende in Strömungsrichtung vorne liegt. Die anstrahlende Windströmung führt dazu, dass sich die bei stehendem Fahrzeug an der zugeordneten Seitenfläche derselben anliegenden Vorsprünge aufstellen und von der zugeordneten Außenfläche des Fahrzeuges bei hinreichender Geschwindigkeit abragen. Die Vorsprünge bewirken an der Vorderkante des Luftleitflügels Wirbel, deren Achsen senkrecht zu der Flügelvorderkante ausgerichtet sind. Dabei wird der Grenzschicht konstant Impuls von der Außenströmung zugeführt, wodurch die Grenzschicht auch bei hohem Gegendruck bei hohen Anstellwinkeln sich nicht komplett von der Fläche ablöst bzw. abreißt, wodurch die aerodynamische Wirkung der Außenfläche des Luftleitflügels verloren gehen würde. Gleichzeitig führen die Vorsprünge zu kleinskaligen Turbulenzen, welche die Grenzschicht an der Außenfläche des Luftleitflügels kräftigen. Mit der erfindungsgemäßen Strömungsführungsvorrichtung soll eine möglichst große Veränderung der Nachlauftopologie der Strömung erreicht werden, d. h. die Strömung soll weitestgehend von der Außenfläche des Fahrzeuges umgelenkt werden, ohne dass die Grenzschicht großräumig von der Außenfläche ablöst. Hierzu ist es vorteilhaft, wenn der Grenzschicht Turbulenz zu ihrer Energieanreicherung zugeführt wird. Des Weiteren wird über kontrolliertes kleinräumiges Ablösen vor der Hinterkante bewusst Turbulenz zur Aufdickung der Grenzschicht zugeführt. Es entsteht insgesamt ein "superkritischer Grenzschichtzustand", wodurch die weitestgehend umgelenkte Grenzschicht ein solches Maß an Aufdickung erfahren hat, dass die Drehung - auch Vorticity genannt - in der dahinter liegenden Scherschicht deutlich verringert wird. In diesem Sinne wirken die zuvor erwähnten Vorsprünge günstig, die Vorsprünge sollen dabei in Strömungsrichtung unmittelbar der vorderen Kante des Luftleitflügels vorgelagert sein.

Insbesondere die Berücksichtigung dieses superkritischen Zustandes erlaubt kurze aber effektive Luftleitflügel, die in der Betriebsstellung zu keiner allzu großen Bauhöhe führen und in der Verstaustellung aufgrund der recht hohen Krümmung ein Abdecken der Gelenke und Aktuatoren zu dem Luftleitflügel erlaubt.

Weitere Einzelheiten und Vorteile der vorliegenden Erfindung ergeben sich aus der Beschreibung in Verbindung mit der Zeichnung. In dieser Zeichnung zeigen:
- Fig. 1: eine Seitenansicht eines Ausführungsbeispiels eines Fahrzeuges mit einem Ausführungsbeispiel einer Strömungsführungsvorrichtung;
- Fig. 2a: eine Draufsicht der Strömungsführungsvorrichtung am Heck eines LKW in der Verstaustellung;
- Fig. 2b: eine Seitenansicht des in Fig. 2a gezeigten Ausführungsbeispiels;
- Fig. 3a: eine Draufsicht auf das in Fig. 2a und 2b gezeigte Ausführungsbeispiel in der Betriebsstellung;
- Fig. 3b: eine Seitenansicht des in Fig. 2a bis 3a gezeigten Ausführungsbeispiels in der Betriebsstellung;
- Fig. 4a bis 4f: perspektivische Seitenansichten des in den Fig. 2 und 3 gezeigten Ausführungsbeispiels zum Bewegungsablauf beim Verstellen des Ausführungsbeispiels von der Verstaustellung in die Betriebsstellung;
- Fig. 5: eine Draufsicht auf eine Montageplatte des zuvor beschriebenen Ausführungsbeispiels;
- Fig. 6: eine Draufsicht auf eine bauliche Einheit des Montageflügels;
- Fig. 7: eine Schnittansicht entlang der Linie VII-VII gemäß der Darstellung in Fig. 6;
- Fig. 7a: eine Draufsicht auf einen Teilbereich eines Fahrzeugs bei aufgeschwenkter Tür;
- Fig. 8: eine Querschnittansicht entsprechend Fig. 7 in verschiedenen Phasen der Schwenkbewegung von der Verstaustellung in die Betriebsstellung;
- Fig. 9a: eine schematische Darstellung zur Verdeutlichung der Geometrie der Außenfläche des Luftleitflügels;
- Fig. 9b, 9c: Darstellungen gemäß Fig. 9a zur Verdeutlichung der Modifizierungen der Kontur der Außenfläche;
- Fig. 10: eine Seitenansicht eines seitlichen Leitflügels in der Betriebsstellung;
- Fig. 11: eine Draufsicht eines Ausführungsbeispiels eines oberseitigen Luftleitflügels in der Betriebsstellung;
- Fig. 12a: eine Draufsicht gemäß Figur 10 mit Bemaßungslinien, deren Werte Tabelle 12b zu entnehmen sind;
- Fig. 13a: eine Draufsicht gemäß Figur 11 mit Bemaßungslinien, deren Werte Tabelle 13b zu entnehmen sind;
- Fig. 14: eine perspektivische Draufsicht einer denkbaren Leitungsführung zwischen einem seitlichen Luftleitflügel und einem oberseitigen Luftleitflügel;
- Fig. 15: einen Graph zu einem denkbaren Geschwindigkeitsverlauf bei der Fahrt eines Fahrzeugs zur Verdeutlichung einer Ansteuerung der Luftleitflügel; und
- Fig. 16: eine perspektivische Seitenansicht eines teilweise aufgerichteten Seitenflügels samt eines Mechanismus mit wendelförmiger Nut.

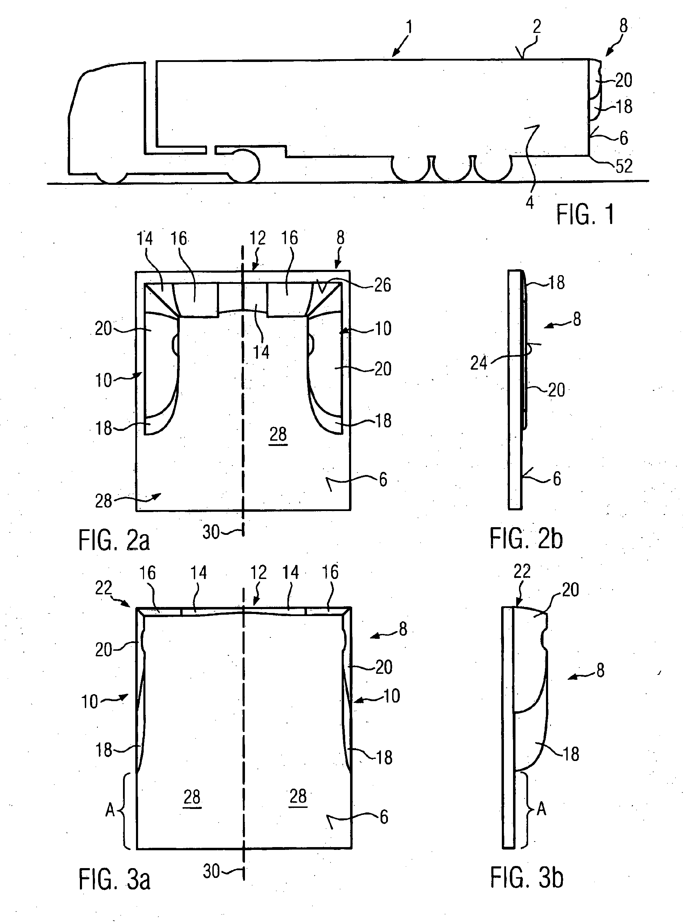

Die Fig. 1 zeigt eine Seitenansicht eines Ausführungsbeispiels am Beispiel eines LKW-Aufliegers, der ein Ausführungsbeispiel eines Fahrzeuges im Sinne der vorliegenden Erfindung bildet und einen Kastenwagen hat, der einen Laderaum umschließt. Der Kastenwagen bildet eine Dachfläche 2 sowie zwei einander gegenüberliegende Längsseitenflächen 4 aus. Von einer Heckfläche 6 des LKW-Aufliegers 1 ragt ein Ausführungsbeispiel einer Strömungsführungsvorrichtung 8 ab.

Einzelheiten dieser Strömungsführungsvorrichtung 8 sind in den Fig. 2a bis 3b in den beiden Endstellungen, nämlich der Verstaustellung (Fig. 2a, 2b) und der Betriebsstellung (Fig. 3a, 3b) verdeutlicht.

Das Ausführungsbeispiel hat zwei seitliche Luftleitflügel 10, die sich vertikal erstrecken, und einen dazwischen vorgesehenen oberseitigen Luftleitflügel 12, der sich horizontal erstreckt.

Der oberseitige Luftleitflügel 12 besteht aus vier Elementen, nämlich zwei Luftleitelementen 14, die verschwenkbar angelenkt sind, und zwei Schiebeelementen 16, die translatorisch relativ zueinander und relativ zu den zugeordneten Luftleitelementen 14 beweglich sind und zwar in horizontaler Richtung.

Die seitlichen Luftleitflügel sind gebildet aus einem Luftleitelement 18 und einem längsverschieblich hierzu vorgesehenen Schiebeelement 20. Die Schiebeelemente 20 sind in der Vertikalen verschieblich gelagert.

In der in den Fig. 2a und 2b gezeigten Verstaustellung stoßen die Luftleitelemente 14 bzw. 18 in Eckbereichen 22 aneinander an. Es ergibt sich eine im Wesentlichen U-förmig geschlossene Oberfläche, die durch die Außenfläche 24 der seitlichen und Außenfläche 26 der oberseitigen Luftleitflügel gebildet wird.

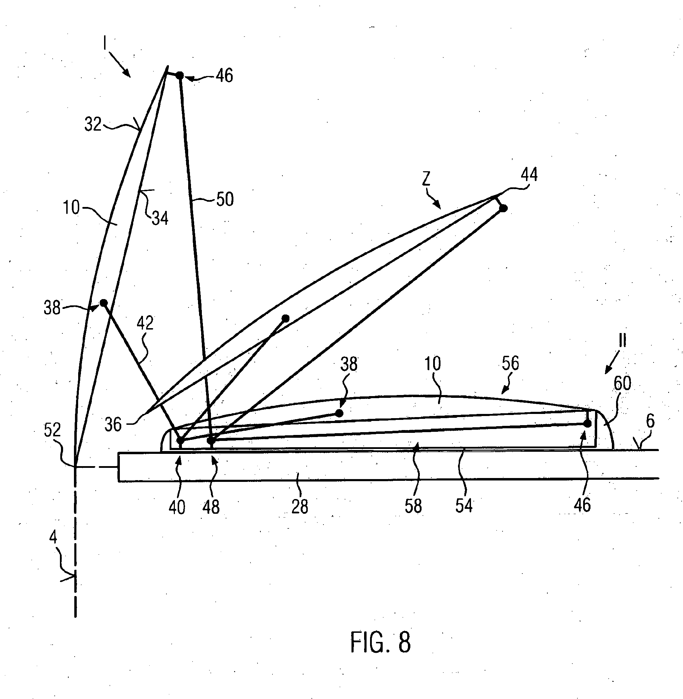

Durch Verschwenken werden die Luftleitflügel 10, 12 nach außen gestellt (Fig. 3a, 3b). Im Rahmen dieser Schwenkbewegung werden die Luftleitelemente 14, 18 um Gelenkpunkte schwenkend bewegt, wohingegen die Schiebeelemente 16, 20 translatorisch entlang der Verschwenkachsen der jeweiligen Luftleitelemente 14, 18 bewegt werden. Die Schwenkachsen der Luftleitelemente 18 der seitlichen Luftleitflügel 10 erstrecken sich dabei in der Vertikalen, d. h. parallel zu Schwenkachsen von Türen 28 des LKW-Aufliegers 1, die ideal gedacht in einer Höhenachse 30 voneinander getrennt werden. Die Luftleitelemente 14 des oberseitigen Luftleitflügels 12 werden um die Horizontale verschwenkt. Aufgrund der Schiebebewegung der Schiebeelemente 16 bzw. 20 stoßen diese in der in Fig. 3a und 3b gezeigten Betriebsstellung in den Eckbereichen 22 aneinander. Es ergibt sich eine U-förmige geschlossene Strömungsleitfläche in Verlängerung der Außenflächen des Aufliegers, d. h. der Dachfläche 2 und der Längsseitenflächen 4. Auch in der Betriebsstellung hat eine untere Kante der seitlichen Luftleitflügel 10 einen Abstand A entsprechend zwischen 0% und 200% der Länge der aufgestellten seitlichen Luftleitfläche von der unteren Kante der Heckfläche 6. Im Rahmen der Schwenkbewegung werden die Luftleitelemente 14, 18 sowie die Schiebeelemente 16, 20 nicht nur um ihre jeweilige Schwenkachse verschwenkt, sondern auch translatorisch nach außen bewegt. Die Kinematik ist in Fig. 8 verdeutlicht.

Fig. 8 zeigt einen Luftleitflügel, beispielsweise einen seitlichen Luftleitflügel 10, in einer Querschnittdarstellung. Der Luftleitflügel 10 ist als geschlossener Hohlkörper ausgeformt, der außenseitig durch eine konvex gekrümmte Außenfläche 32 und innenseitig durch eine sich geradlinig erstreckende Innenfläche 34 begrenzt ist. Die Außenfläche 32 und die Innenfläche 34 laufen in ihren Endbereichen spitz zu. In etwa mit einem Abstand von einem Drittel der Gesamtlänge L des Luftleitflügels 10 von einer vorderen Kante 36 des Luftleitflügels 10 befindet sich ein erster flügelseitiger Gelenkpunkt 38, der mit einem äußeren befestigungsseitigen Gelenkpunkt 40 über eine vordere Gelenkstange 42 gekoppelt ist. Im Bereich einer hinteren Kante 44 befindet sich ein zweiter flügelseitiger Gelenkpunkt 46, der über einen inneren befestigungsseitigen Gelenkpunkt 48 unter Zwischenschaltung einer hinteren Gelenkstange 50 verbunden ist.

Diese gelenkige Anordnung des Luftleitflügels 10 bildet vorliegend ein Ausführungsbeispiel eines Gliedertriebes aus. Der Gliedertrieb ist derart gewählt, dass die vordere Kante 36 in einer mit Bezugszeichen I gekennzeichneten Betriebsstellung bündig an eine heckseitige Fahrzeugkante 52 (vorliegend die Kante zwischen der Längsseitenfläche 4 und der Heckfläche 6 - gestrichelte Linien) anstößt, wobei die Außenfläche 32 die Längsseitenfläche 4 im Bereich der vorderen Kante 36 nach Art einer Tangente zunächst geradlinig verlängert, so dass sich eine von der heckseitigen Fahrzeugkante 52 absatzfrei nach hinten erstreckende Luftleitfläche an der Außenfläche 32 des Flügels 10 ergibt, die an der hinteren Kante 44 nach innen eingezogen endet. In einer Zwischenstellung Z zwischen der Betriebsstellung I und einer Verstaustellung II ist der Luftleitflügel 10 bereits nach innen geneigt. Aufgrund des Gliedertriebes ist die vordere Kante 36 bereits von der heckseitigen Fahrzeugkante 52 nach hinten abgehoben und nach innen versetzt. In der Verstaustellung II liegt die geradlinig verlaufende Innenfläche 34 im Wesentlichen parallel zu einer mit Bezugszeichen 54 gekennzeichneten Montageplatte.

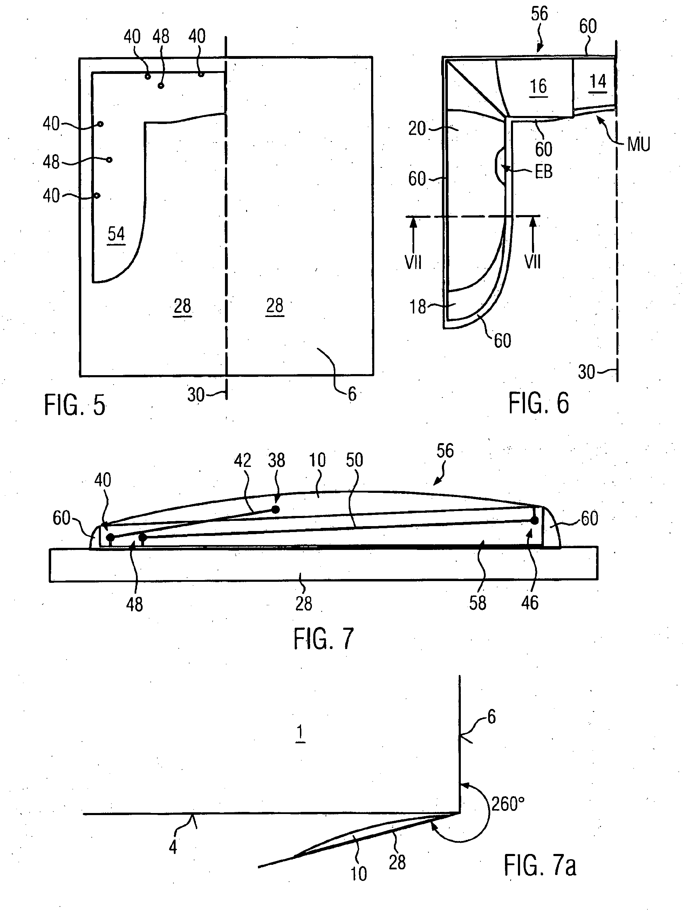

Details dieser Montageplatte sind in den Fig. 5 bis 7 dargestellt. Dabei verdeutlicht die Fig. 5 die Anordnung der befestigungsseitigen Gelenkpunkte 48 bzw. 40. Wie aus Fig. 5 ersichtlich, ist die Montageplatte 54 L-förmig ausgeformt und hat entsprechende befestigungsseitige Gelenkpunkte 40, 48 für den seitlichen Leitflügel 10 und oberseitigen Luftleitflügel 12, welche zusammen ein L-förmiges Segment 56 bilden (vgl. Fig. 6). Die jeweiligen befestigungsseitigen Gelenkpunkte 40, 48 sind für den oberseitigen Luftleitflügel 12 und den seitlichen Luftleitflügel 10 jeweils identisch indiziert.

Wie aus Fig. 6 ersichtlich, besteht das Segment 56 aus einem Luftleitelement 14 und einem Schiebeelement 16. Fig. 6 zeigt eine Draufsicht auf die Verstaustellung und verdeutlicht zusammen mit Fig. 7 die Aufnahme der jeweiligen Luftleitflügel 10, 12 in einem Aufnahmekasten 58, der unterseitig durch die Montageplatte 54 begrenzt wird und seitlich durch Endkappen 60, die eine konvex gekrümmte Kontur haben und jeweils absatzfrei und kontinuierlich in die Außenfläche 32 des zugeordneten Luftleitflügels 10, 12 übergehen. Wie Fig. 6 verdeutlicht, laufen die Endkappen 60 außenseitig um die jeweiligen Flügel 10, 12 in der Verstaustellung um. Lediglich auf der Höhenachse 30 fehlen die entsprechenden Endkappen, da dort das in Fig. 6 gezeigte linke L-förmige Segment 56, welches als vormontierte Baueinheit ausgebildet und an das Fahrzeug anschlagbar ist, an das rechte, in Fig. 6 nicht dargestellte, aber ebenfalls L-förmige Segment beinahe anstößt. Durch die beschriebene Ausgestaltung wird auch in der Verstaustellung ein ästhetischer Eindruck vermittelt. Die geradlinig verlaufende Innenfläche 34 erstreckt sich weitgehend parallel zu der Montageplatte 54. Die Elemente 38 bis 50 des Gliedertriebes sind von dem Flügel oberseitig und randseitig von den Endkappen 60 abgedeckt und vor Verschmutzung im Wesentlichen geschützt. Mit Fig. 7a ergibt sich ferner, dass eine den seitlichen Luftleitflügel 10 und das Segment 56 des oberseitigen Luftleitflügels 12 aufnehmende Tür 28 von der bisher diskutierten Schließstellung in eine um etwa 260° verschwenkte Offenstellung gebracht werden kann, ohne dass die Luftleitflügel 10, 12 mit der Längsseitenfläche 4 des LKW-Aufliegers 1 kollidieren. Die Anordnung trägt nur unwesentlich in der Dicke der Tür 28 auf. Die freie Verschwenkbarkeit der Türen 28 nach außen ist nicht beeinträchtigt.

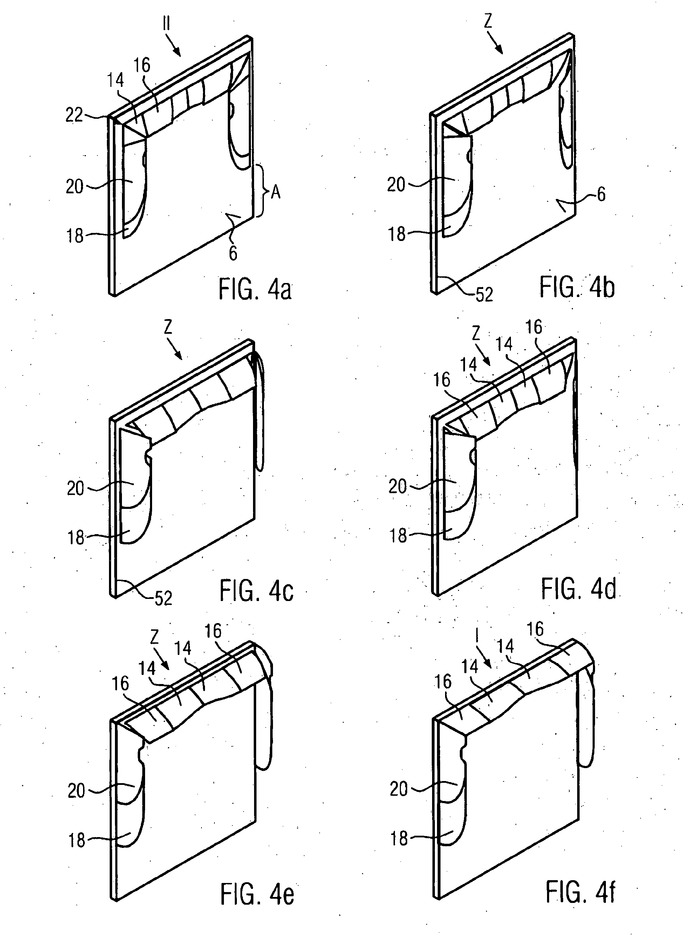

Die Fig. 4a bis 4f verdeutlichen das Aufstellen der Luftleitflügel 10, 12 von der bereits zuvor diskutierten Verstaustellung II (Fig. 4a) in die Betriebsstellung I (Fig. 4f).

In der Verstaustellung gemäß Fig. 4a stoßen die Luftleitelemente 14, 18 der jeweiligen Luftleitflügel 10, 12 im Eckbereich 22 aneinander. Die Schiebeelemente 16 bzw. 20 befinden sich auf den zugeordneten Luftleitelementen 14, 18. Demnach überragt jedes Luftleitelement 14 des oberseitigen Luftleitflügels 12 das zugeordnete Schiebeelement 16 in horizontaler Erstreckung, wohingegen das Schiebeelement 20 des seitlichen Luftleitflügels 10 beidseitig von dem Luftleitelement 18 des entsprechenden Luftleitflügels 10 überragt wird. Durch in der Verstaustellung II innerhalb des Aufnahmekastens 58 angeordnete Aktuatoren wird die Schwenkbewegung ausgelöst. Dabei wird zum einen das Schiebeelement in der zuvor bereits unter Bezugnahme auf Fig. 8 beschriebenen Weise nach außen verschwenkt und translatorisch bewegt. Gleichzeitig werden die Schiebeelemente 16 des oberseitigen Luftleitelementes 12 nach außen gefahren, wohingegen die Schiebeelemente 20 der beiden seitlichen Luftleitflügel 10 nach oben gefahren werden. Mit anderen Worten nähern sich die Schiebeelemente 16, 20 einander an, während gleichzeitig eine Schwenkbewegung des Luftleitflügels 10 bzw. 12 insgesamt durchgeführt wird. Am Ende dieser Schwenkbewegung befinden sich die jeweiligen Luftleitflügel 10, 12 in der Betriebsstellung I. Die Schiebeelemente 16, 20 stoßen in den Eckbereichen 22 gegeneinander und überragen nunmehr einen oberen Begrenzungsrand des Luftleitelementes 18 bzw. einen lateralen Begrenzungsrand der Luftleitelemente 14, die zuvor in der Verstaustellung II in den Eckbereichen 22 noch im Wesentlichen aneinander lagen, jedenfalls aber in der Verstaustellung einen Beitrag zu einer U-förmigen, kontinuierlich ausgeformten Kontur erbringen (vgl. Fig. 4a).

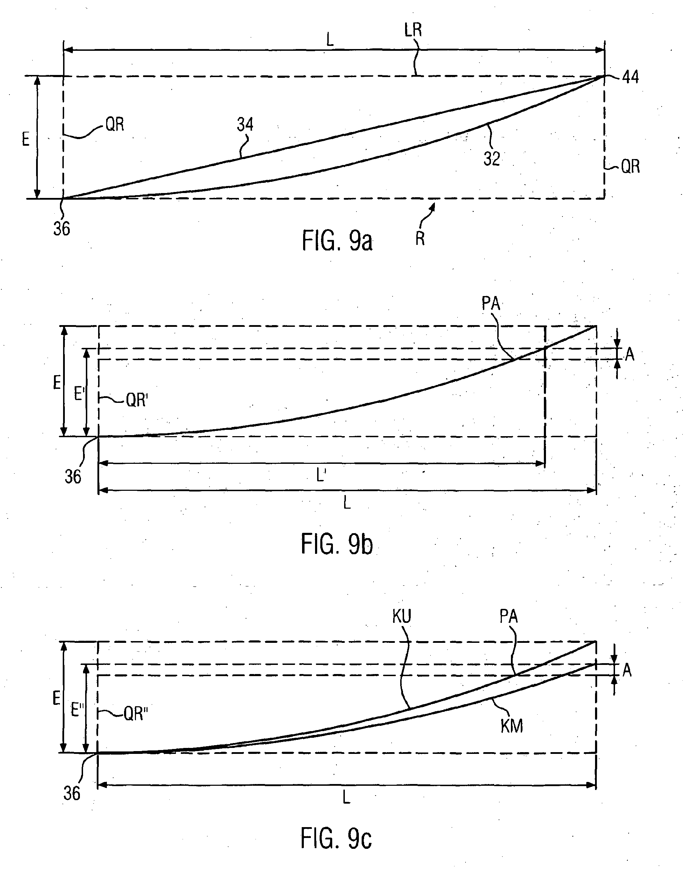

Fig. 9a verdeutlicht die Auslegung der Querschnittsgeometrie eines Luftleitflügels 10, 12. Dabei geht es speziell um die Kontur der Außenfläche des Luftleitflügels 10, 12. Im Folgenden sei der beschriebene Luftleitflügel ein seitlicher Luftleitflügel 10. Die entsprechende Beschreibung kann aber ebenso gut für die Auslegung und Ausgestaltung des oberseitigen Luftleitflügels 12 herangezogen werden.

Der Luftleitflügel 10 hat eine Länge von zwischen 350 mm und 700 mm, vorzugsweise von zwischen 400 mm und 600 mm. Als Länge L ist dabei die Erstreckung eines Längsrandes LR eines Rechtecks R zu verstehen, an den sich die Außenfläche 32 im Bereich der vorderen Kante 36 tangential annähert. Die vordere Kante 36 liegt dabei im Schnitt, d. h. Schnitt- bzw. Eckpunkt, des Rechtecks R dort, wo der Längsrand LR einen Querrand QR schneidet. Die beiden Längsränder LR und die beiden Querränder QR spannen das Rechteck R auf. Die hintere Kante 44 des Luftleitflügels 10 liegt in einem Eckpunkt gegenüberliegend zu dem Eckpunkt in dem sich die vordere Kante 36 befindet. Wie bereits erwähnt, ist die Außenfläche 32 zwischen den beiden Kanten 36, 44 kontinuierlich gekrümmt. Der Querrand QR hat eine Einzugslänge E von zwischen 0,2 und 0,3, vorzugsweise von zwischen 0,22 und 0,24 der Länge L des Längsrandes LR. Diese Strömungsgeometrie erweist sich als vorteilhaft für die Führung der Luft an dem Heck des Fahrzeugs. Es versteht sich von selbst, dass die vordere Kante 36 möglichst absatzfrei mit der zugeordneten Fläche, d. h. der Dachfläche 2 bzw. der Längsseitenfläche 4 des Fahrzeugs vorgesehen sein sollte. Mit anderen Worten verlängert der Längsrand LR bei einer Anordnung des Luftleitflügels 10 in der Betriebsstellung die Längserstreckung der zugeordneten Fläche 2, 4. Die Einzugslänge E ist dementsprechend dasjenige Maß, um welches der Luftleitflügel 10 die Strömung nach Innen und hinter das Fahrzeug führt.

Die in der Fig. 9a gezeigte Kontur des Luftleitflügels 10 kann experimentell modifiziert werden, wenn sich zeigt, dass die Strömung lokal vorzeitig von der Außenfläche 32 ablöst. Verantwortlich können hierfür beispielsweise Verwirbelungen an den Außenspiegeln des Zugfahrzeuges sein. Praktische Versuche der vorliegenden Erfinder haben gezeigt, dass an der oberen Kante und an der unteren Kante des Seitenspiegels des Zugfahrzeuges Wirbel hinter dem Seitenspiegel und an der Längsseitenfläche 4 des Fahrzeuges entstehen. Dabei dreht sich der von der Oberkante des Außenspiegels erzeugte Wirbel üblicherweise zu einem Dachwirbel, der an der Ecke zwischen der Längsseitenfläche und der Dachfläche vorhanden ist. Aufgrund des Drehsinnes der beiden zugeordneten Wirbel ergibt sich dazwischen ein Bereich verlangsamter Strömung, der zu einem vorzeitigen Ablösen der Strömung der in Fig. 9a gezeigten Kontur führen kann. Ein solches Ablösen kann experimentell unter reellen Strömungsbedingungen an dem Fahrzeug ermittelt werden.

Die zuvor beschriebenen Dachwirbel drehen gegenläufig, so dass sich ein Bereich verlangsamter Strömung auch mittig auf der Dachfläche ergibt. Auch hier neigt die Strömung eher dazu, von dem oberseitigen Luftleitflügel 12 abzureißen.

Die aerodynamische Wirkung des Luftleitflügels 10, 12 kann nun verbessert werden, indem die Kontur an die lokal wirkenden Strömungsverhältnisse angepasst wird, wie sie in den Fig. 9b und 9c verdeutlicht ist. Dort ist der in Fig. 9a gezeigte Flügel in ein Rechteck R mit gestrichelten Linien eingezeichnet, welches dem Rechteck R nach Fig. 9a entspricht. Als Ablösepunkt [PA] sei derjenige Punkt zu verstehen, an dem eine Ablösung der Strömung unter Fahrbedingungen (beispielsweise bei einer Reisegeschwindigkeit von 80 km/h) beobachtet wird. Zur Modifikation gibt es weiterhin einen Abstand [A], der zwischen 0,1 und 0,05 der Einzugslänge E betragen kann. Der Abstand ist größer Null. Die Kontur soll nun so modifiziert werden, dass lokal der Abstand zwischen Ablösepunkt und der hinteren Kante 44 die Länge [A] hat. Genauer gesagt wird die Kontur angepasst, um im Sinne des "superkritischen Zustands" eine definierte Menge an Ablösung in die Scherschicht einzuleiten. Das Maß an definierter Ablösung wird dabei durch A vorgegeben.

Eine mögliche Korrektur ist in Fig. 9b dargestellt. Dabei werden Länge und Einzug unter Beibehaltung der Krümmung an die Lage des Ablösepunktes angepasst. Die neue Einzugslänge E' und damit der modifizierte Querrand QR' werden gebildet durch den Abstand zwischen dem der vorderen Kante 36 zugeordneten Längsrand LR und dem Ablösepunkt zuzüglich des Abstands [A]. Die Krümmung der ursprünglichen Außenfläche wird dabei nicht verändert, somit ergibt sich auch eine neue Länge L'.

Die zweite Möglichkeit zur Korrektur ist in Fig. 9c dargestellt. Dabei wird unter Beibehaltung der Länge L der Einzug verändert, wodurch sich die Krümmung der Kontur ändert, was wiederum einen Einfluss auf die Lage des Ablösepunktes hat. Eine verringerte Krümmung von einer ursprünglichen Kontur KU zu einer modifizierten Kontur KM bewirkt eine Verschiebung des Ablösepunktes in Richtung der hinteren Kante 44. Es wird also die Lage des Ablösepunktes an die Konturlänge angepasst. Die neue Einzugslänge E" und damit der modifizierte Querrand QR" werden gebildet durch den Abstand zwischen dem der vorderen Kante 36 zugeordneten Längsrand LR und dem Ablösepunkt zuzüglich des Abstands [A].

Zusätzlich zur Anpassung mit einem der genannten Verfahren ist auch eine hybride Lösung möglich, bei welcher sowohl die Krümmung als auch die Konturlänge lokal angepasst werden. Auf diese Weise kann unter Einhaltung des Abstandes [A] die Form der Luftleitflächen verändert werden.

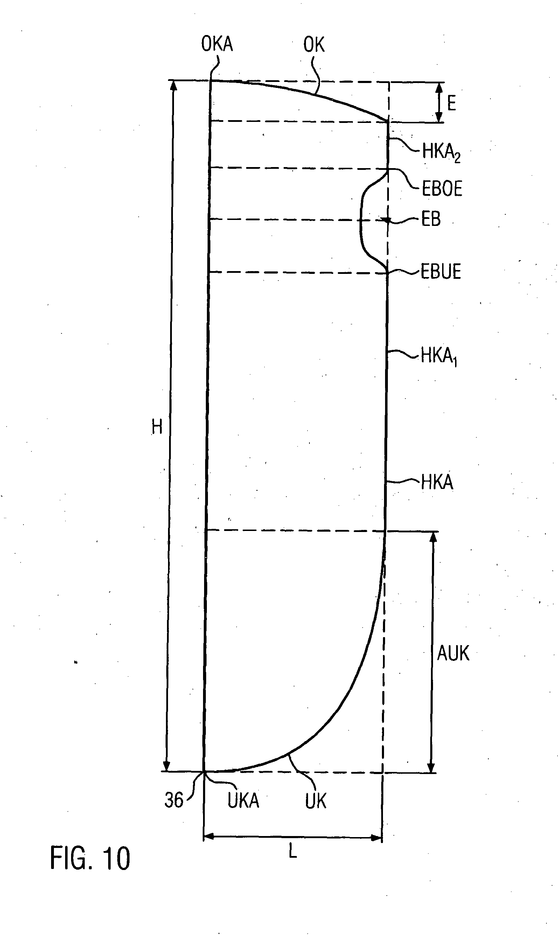

Der seitliche Luftleitflügel 10 hat eine Höhe in der Betriebsstellung von zwischen 1200 und 2700 mm, vorzugsweise von zwischen 1800 und 2300 mm. Wie Fig. 1 verdeutlicht, ist der erfindungsgemäße Luftleitflügel 10 weniger hoch als die dem Luftleitflügel vorangehende durchgehende Längsseitenfläche des Fahrzeuges. Die Höhe des seitlichen Luftleitflügels 10 entspricht üblicherweise nicht mehr als 75 %, bevorzugt nicht mehr als 60 % der Höhe der zugeordneten Längsseitenfläche 4. Als "Höhe" wird dabei die Erstreckung im montierten Zustand und in der Betriebsstellung in der Vertikalen bezeichnet. Diese Höhe ist in Fig. 10 mit H indiziert, wobei diese Figur den Betriebszustand zeigt. In Fig. 10 ist auch eine konvex gekrümmte untere Kontur zu erkennen, die von der vorderen Kante 36 abgeht, und zwar dort mit einem Winkel zwischen 0° und 50°, vorzugsweise zwischen 0° und 20° und besonders bevorzugt zwischen 1° und 10°. Bei einem Neigungswinkel von größer 0° befindet sich die untere Kontur UK innerhalb eines Rechtecks, welches durch die zuvor bereits diskutierte Länge L und die Höhe H definiert ist. Mit anderen Worten ist der kantennahe Bereich der unteren Kontur UK nach oben geneigt. Die untere Kontur UK nähert sich aber im Wesentlichen tangential der Horizontalen an, welche vorliegend parallel zu der Erstreckung der Länge L liegt. Die untere Kontur UK geht des Weiteren in ihrem oberen Bereich tangential in einen sich vertikal geradlinig verlaufenden hinteren Kantenabschnitt HKA über. Dieser hintere Kantenabschnitt HKA erstreckt sich in der Vertikalen.

Bei dem gezeigten Ausführungsbeispiel eines seitlichen Luftleitflügels 10 gemäß Fig. 10 erstreckt sich der hintere Kantenabschnitt HKA unterbrochen von einer Einbuchtung EB bis zu einem Punkt, der von einer obersten Kante OKA des Luftleitflügels 10 einen Abstand entsprechend der zuvor diskutierten Einzugslänge E hat. Die konvex gekrümmte Kontur UK hat eine höhenmäßige Erstreckung AUK, wobei AUK das Abstandsmaß zwischen einer untersten Kante UKA (Schnittpunkt UK mit vorderer Kante 36) und dem oberen Ende der unteren Kontur UK angibt, von etwa 500 bis 900 mm, vorzugsweise von zwischen 600 und 800 mm. Danach ergibt sich die Länge des geradlinig verlaufenden hinteren Kantenabschnitts HKA einschließlich der Einbuchtung EB zu (H-AUK-E). Bei dem gezeigten Ausführungsbeispiel wird die Einbuchtung EB beidseitig von Segmenten HKA₁ und HKA₂ des hinteren Kantenabschnitts begrenzt. Die Einbuchtung EB befindet sich im oberen Bereich des seitlichen Luftleitflügels 10. Die Mitte der Einbuchtung liegt etwa 400 mm unterhalb einer Oberkante OKA des Luftleitflügels 10. Ein oberes Ende EBOE der Einbuchtung hat einen Abstand von zwischen 200 und 300 mm von einer obersten Kante OKA. An diesem oberen Ende EBOE geht die Einbuchtung von dem oberen Segment HKA₂ des geradlinig verlaufenden hinteren Kantenabschnitts HKA ab. Ein unteres Ende EBUE der Einbuchtung EB hat einen Abstand von zwischen 500 und 600 mm von der obersten Kante OKA und geht dort von dem unteren Segment HKA₁ des geradlinig verlaufenden hinteren Kantenabschnitts HKA ab. Soweit vorstehend auf den Abstand zu der Oberkante OKA abgestellt wurde, erfolgte dies mit Rücksicht auf die oberste Kante OKA als denjenigen Punkt, an dem die obere Kante OK die vordere Kante 36 ausbildet. Hier ist der höchste Punkt des seitlichen Luftleitflügels 10 gebildet.

Wie Fig. 10 zu erkennen gibt, ist die obere Kante OK nach unten gekrümmt ausgebildet. Die Ausgestaltung entspricht der mit Bezugnahme auf Fig. 9a beschriebenen Kontur. Dementsprechend bildet die Oberkante einen nach unten gezogenen, konvex gekrümmten Einzug aus. Dieser Einzug geht vorzugsweise an der vorderen Kante 36 von einer horizontalen Linie ab. Der Einzug kann aber auch geringfügig von bis zu 5° gegenüber der Horizontalen nach unten geneigt sein. Es versteht sich von selbst, dass die vordere Kante 36 in der Vertikalen geradlinig ausgebildet ist und sich streng in der Vertikalen erstreckt.

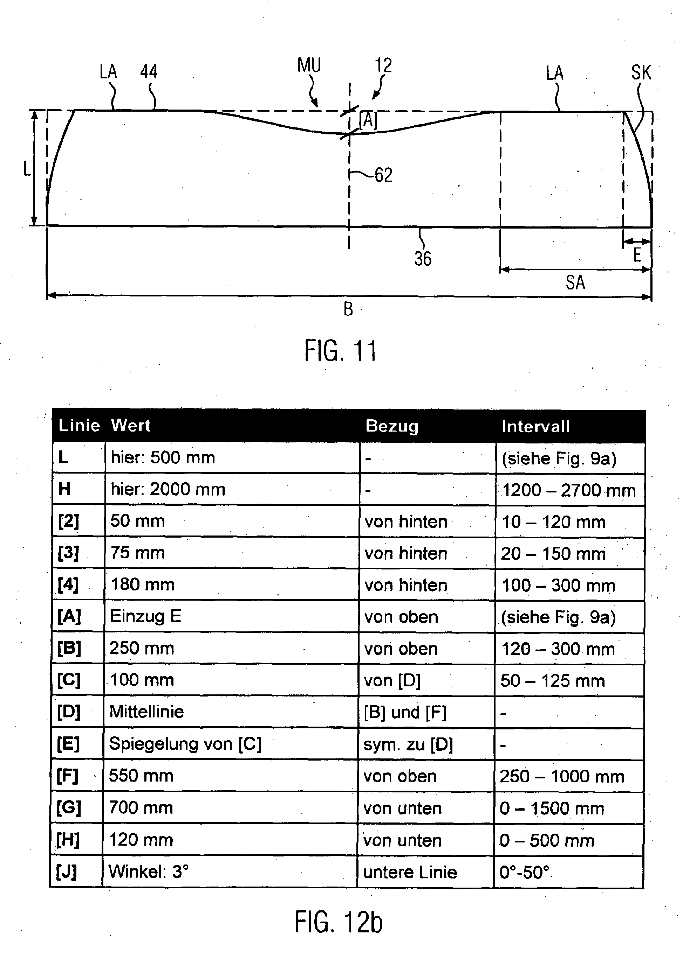

Wie Fig. 11 verdeutlicht, hat auch der dort in der Draufsicht und in der Betriebsstellung gezeigte oberseitige Luftleitflügel 12 an seiner hinteren Kante eine Konturierung. Die Kontur des oberseitigen Luftleitflügels 12 ist symmetrisch zu einer Mittellängsachse 62, die der Mittellängsachse des Fahrzeuges in Fahrtrichtung entspricht. An der hinteren Kante 44 bildet der oberseitige Luftleitflügel 12 zwei geradlinig verlaufende laterale Abschnitte LA aus, die parallel zu der vorderen Kante 36 verlaufen. Die lateralen Ränder haben eine seitliche Kontur SK, wie zuvor unter Bezugnahme auf Fig. 9 beschrieben. Dementsprechend sind die seitlichen Konturen konvex gekrümmt und gehen an der vorderen Kante 36 mit einem Winkel kleiner 5°, vorzugsweise mit einem Winkel von 0° von einer Parallelen zu der Mittellängsachse 62 ab. Die seitlichen Konturen SK sind jeweils konvex nach Innen gekrümmt und bilden einen Einzug mit der Einzugslänge E, wie unter Bezugnahme auf Fig. 9a beschrieben, aus. Wie des Weiteren Fig. 11 verdeutlicht, geht die Mulde MU mit einem seitlichen Abstand SA von zwischen 0,20 und 0,30, vorzugsweise von 0,23 und 0,27 einer Breite B des oberen Luftleitflügels 12 von dem geradlinig verlaufenden lateralen Abschnitt LA ab. Dieser seitliche Abstand SA wird an der vorderen Kante 36 abgetragen, d. h. an dem Punkt maximaler Erstreckung des Luftleitflügels 12 in Breitenrichtung. Die Mulde MU hat einen konkav geformten Muldengrund, der gleichmäßig über schließlich konvex geformte Muldenränder in den geradlinig verlaufenden lateralen Abschnitt LA in Form einer Tangente angenähert ist, und in diesen übergeht. Die Mulde MU hat in ihrer Mitte, d. h. auf der Mittellängsachse 62, einen Einzug mit dem Abstand [A] von vorliegend 0,2 der Länge L, wobei L vorliegend mit 500 mm gegeben ist, und die Breite der Mulde MU 0,5 der Breite B beträgt. Das Maß [A] kann zwischen 0,15 und 0,25 der Länge L, bevorzugt zwischen 0,18 und 0,22 der Länge L betragen.

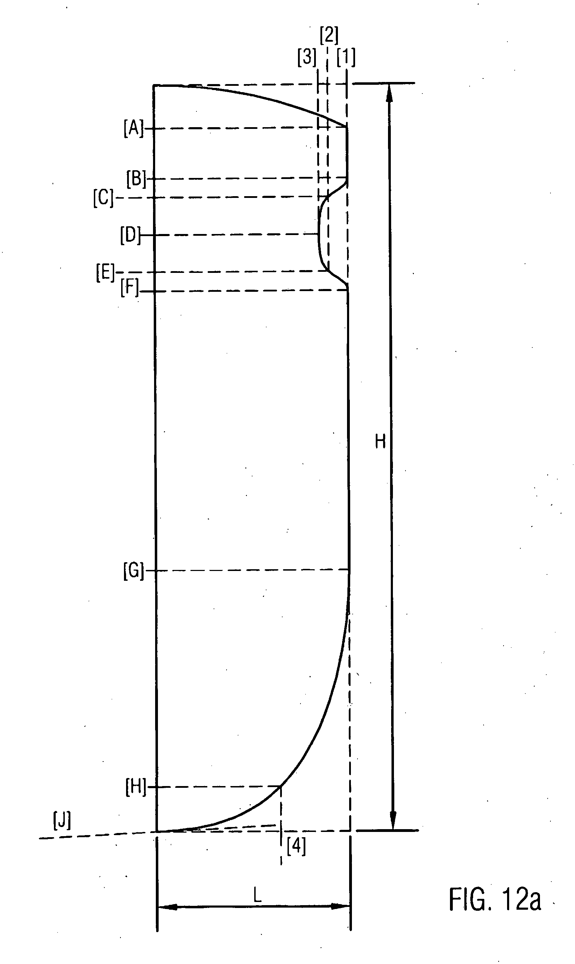

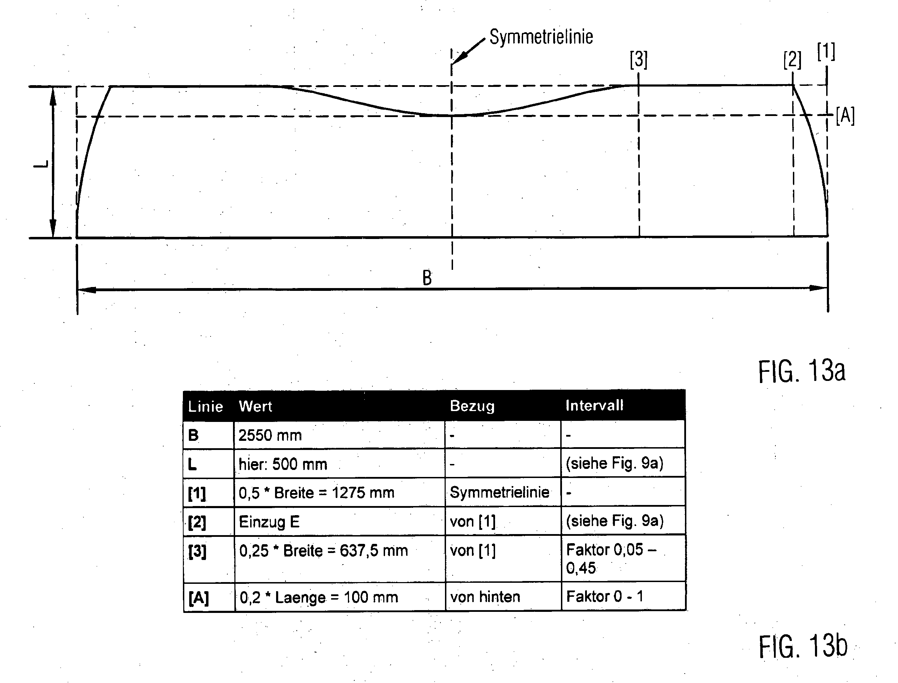

Weitere Details sowie Abmessung und Modifikationen des seitlichen Luftleitflügels 10 bzw. des oberseitigen Luftleitflügels 12 ergeben sich aus den Fig. 12a und 13a sowie den mit diesen Figuren wiedergegebenen Tabellen 12b bzw. 13b. Diese geben absolute und relative Maße mit den einzelnen in den Fig. 12 und 13 angegebenen Maßpunkten wieder. Hinsichtlich der Länge und der Einzugslänge wird erneut auf Fig. 9a und die hierzu vorgelegte spezielle Beschreibung verwiesen. Die Maße für die Länge L und die Einzugslänge E sind ferner in Anspruch 8 angegeben.

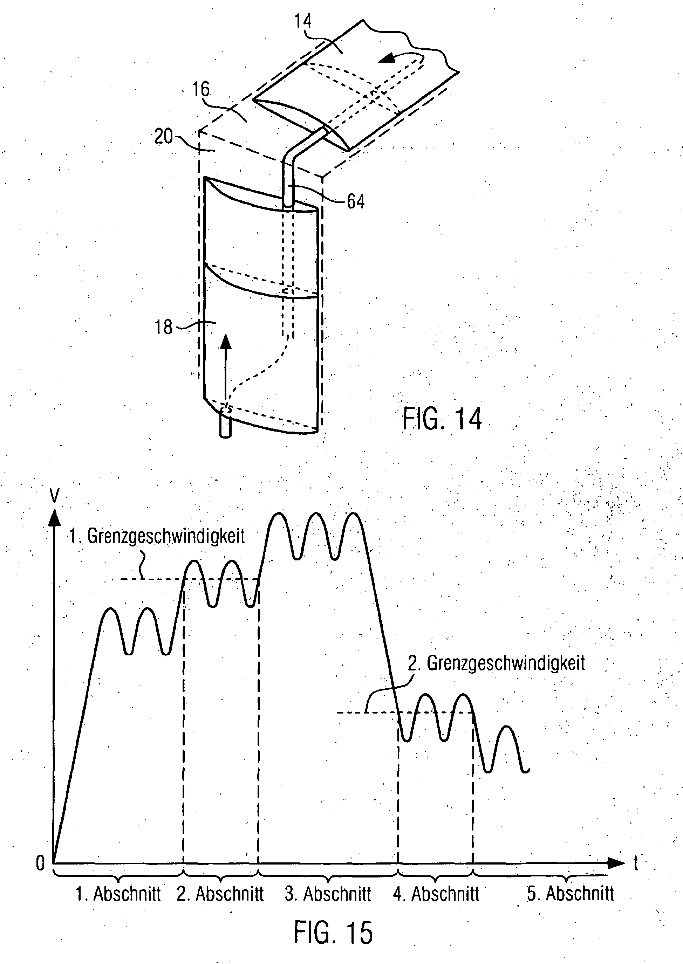

Fig. 14 verdeutlicht ein Ausführungsbeispiel zur Druckluftversorgung innerhalb der Luftleitflügel 10, 12; gezeigt sind hierbei in durchgezogenen Linien jeweils die Luftleitelemente 14, 18. In gestrichelten Linien sind die in der Betriebsstellung vorgesehenen Schiebeelemente 16, 20. Wie ersichtlich, erstreckt sich zwischen den Luftleitelementen 18, 14 ein in etwa um 90° umgebogenes Rohrstück 64, welches verschwenkbar und verschieblich in den Luftleitelementen 14, 18 geführt ist und ein Teilstück einer Druckluftleitung ausbildet, um Druckluft von unten durch den seitlichen Luftleitflügel 10 zu dem oberseitigen Luftleitflügel 12 zu überführen. Durch die Gestaltung sind die Luftleitflügel 10, 12 formschlüssig miteinander verbunden.

Die Fig. 15 verdeutlicht die Steuerung der Luftleitflügel 10, 12 abhängig von der Geschwindigkeit des Fahrzeugs. Diese ist auf der Abszisse abgetragen, wohingegen auf der Koordinate die Zeit abgetragen ist.

Zum Zeitpunkt t = 0 setzt sich das Fahrzeug in Bewegung. In einem ersten Abschnitt (beispielsweise Zubringer zur Autobahn) fährt das Fahrzeug unterhalb einer ersten Grenzgeschwindigkeit. Diese Grenzgeschwindigkeit ist in der Steuerung hinterlegt und führt zum Aufstellen der Luftleitflügel von der Verstaustellung in die Betriebsstellung. Wird ein die erste Grenzgeschwindigkeit wiedergebendes Geschwindigkeitssignal von der Steuerung erfasst, führt dies indes noch nicht unmittelbar dazu, dass die Luftleitflügel 10, 12 aufgestellt werden. Vielmehr hat die Steuereinheit ein Verzögerungsmodul, welches überprüft, ob die erste Grenzgeschwindigkeit in einem vorbestimmten Zeitintervall wieder unterschritten wird. In diesem Fall unterbleibt das Absetzen eines das Aufstellen vorgebenden Signals. Dementsprechend bleiben die Luftleitflügel 10, 12 in dem zweiten Abschnitt in der Verstaustellung. In diesem zweiten Abschnitt pendelt die gemessene Geschwindigkeit um die erste Grenzgeschwindigkeit und über- sowie unterschreitet diese. Die Grenzgeschwindigkeit wird hier immer kürzer als der vorbestimmte Zeitraum vorgibt überschritten.

In dem dritten Abschnitt wird eine wesentlich höhere Geschwindigkeit erzeugt. Zwar schwankt die tatsächliche Geschwindigkeit. Sie unterschreitet aber zu keiner Zeit die erste Grenzgeschwindigkeit. Danach werden in einem Anfangsstadium des dritten Abschnitts und nach Beendigung des vorbestimmten Zeitraums die Luftleitflügel 10, 12 ausgestellt und in die Betriebsstellung verbracht.

In dem vierten Abschnitt sinkt die Geschwindigkeit. Sie pendelt allerdings um eine zweite Grenzgeschwindigkeit, die bei dem gezeigten Ausführungsbeispiel geringer als die erste Grenzgeschwindigkeit ist. Diese zweite Grenzgeschwindigkeit wird in dem vierten Abschnitt jeweils kürzer als der vorbestimmte Zeitraum unterschritten. So wird von der Steuereinrichtung kein Signal abgesetzt, welches dazu führt, dass die Luftleitflügel 10, 12 von der Betriebsstellung in die Verstaustellung zurückgeführt werden. Erst in dem fünften Abschnitt wird die zweite Grenzgeschwindigkeit dauerhaft unterschritten. So wird zu Beginn des fünften Abschnitts und nach Beendigung des vorbestimmten Zeitintervalls ein Signal abgesetzt, durch welches die den Luftleitflügeln 10, 12 zugeordneten Aktuatoren diese in die Verstaustellung zurückführen.

Durch die beschriebene Steuerung wird verhindert, dass die Luftleitflügel 10, 12 bei schwankender Geschwindigkeit um die Grenzgeschwindigkeiten permanent auf- bzw. zugefahren werden.

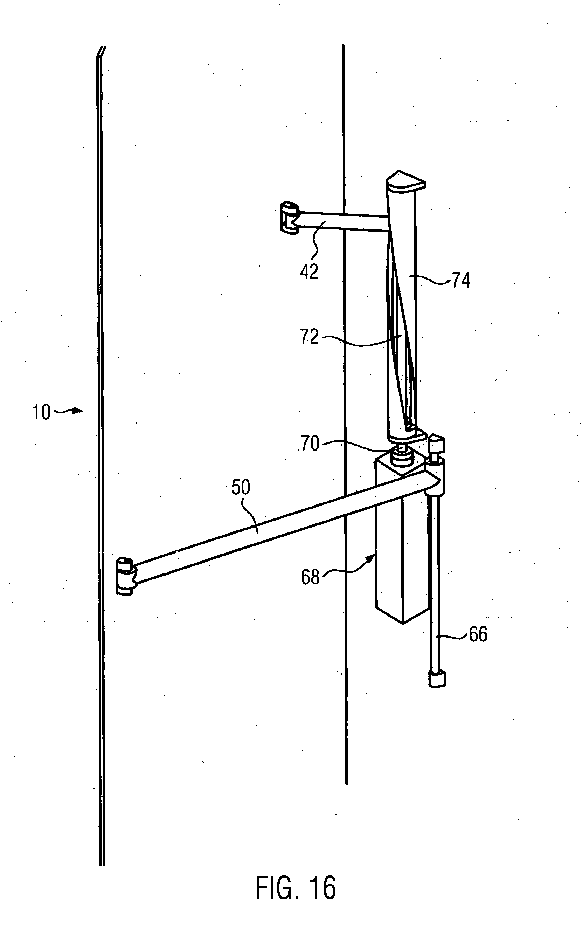

Die Figur 16 zeigt ein Ausführungsbeispiel zur Betätigung des seitlichen Luftleitflügels 10. Wie ersichtlich, ist das Luftleitelement 18 über die hintere Gelenkstange 50 an einer Achsstange 66 gelagert und in axialer Richtung relativ zu dieser Achsstange 66 beweglich. Auf Höhe dieser Achsstange 66 befindet sich ein Hubzylinder in Form eines doppelt wirkenden Pneumatikzylinders 68, dessen Kolbenstange einen Schwenkachskörper 70 ausformt. Dieser Schwenkachskörper 70 ist fest mit der vorderen Gelenkstange 42 verbunden, die an dem Luftleitflügel 10 angelenkt ist. Die vordere Gelenkstange 42 durchragt eine wendelförmige Nut 72, die in einer ortsfest angeordneten und den Schwenkachskörper im Wesentlichen aufnehmenden Hülse 74 ausgespart ist.

Bei Betätigung des Pneumatikzylinders 68 wird dementsprechend der Schwenkachskörper 70 in axialer Richtung innerhalb der Hülse 74 bewegt. Dadurch wird der Luftleitflügel 10 in Längsrichtung der Achsstange 66 translatorisch verschoben. Gleichzeitig ergibt sich eine Verschwenkbewegung durch die wendelförmige Nut 72, die relativ zu der axialen Erstreckung der Achsstange 66 weiter nach außen versetzt, jedoch parallel zu der Schwenkachse der Achsstange 66 vorgesehen ist.

Das in Figur 16 dargestellte Ausführungsbeispiel ist eine mögliche und recht einfache und effektive Gestaltung zum Aufrichten des seitlichen Luftleitflügels. Durch Betätigung des Pneumatikzylinders wird dementsprechend nicht nur der Luftleitflügel verschwenkt, sondern gleichzeitig auch angehoben, sodass der Luftleitflügel mit seiner oberen Kante bündig an die obere Kante des Fahrzeuges in der Betriebsstellung angesetzt und in der Verstaustellung mit Abstand zu der Außenkontur des Fahrzeughecks angeordnet werden kann.

### Bezugszeichenliste

- 1: LKW-Auflieger
- 2: Dachfläche
- 4: Längsseitenfläche
- 6: Heckfläche
- 8: Strömungsführungsvorrichtung
- 10: seitlicher Luftleitflügel
- 12: oberseitiger Luftleitflügel
- 14: Luftleitelement des oberseitigen Luftleitflügels 12
- 16: Schiebeelement des oberseitigen Luftleitflügels 12
- 18: Luftleitelement des seitlichen Luftleitflügels 10
- 20: Schiebeelement des seitlichen Luftleitflügels 10
- 22: Eckbereich
- 24: Außenfläche des seitlichen Luftleitflügels 10
- 26: Außenfläche des oberseitigen Luftleitflügels 12
- 28: Türen
- 30: Mittlere Höhenachse
- 32: Außenfläche
- 34: Innenfläche
- 36: vordere Kante
- 38: erster flügelseitiger Gelenkpunkt
- 40: äußerer befestigungsseitiger Gelenkpunkt
- 42: vordere Gelenkstange
- 44: hintere Kante
- 46: zweiter flügelseitiger Gelenkpunkt
- 48: innerer befestigungsseitiger Gelenkpunkt
- 50: hintere Gelenkstange
- 52: heckseitige Fahrzeugkante
- 54: Montageplatte
- 56: Segment des oberseitigen Luftleitflügels 12
- 58: Aufnahmekasten
- 60: Endkappe
- 62: Mittellängsachse
- 64: Rohrstück
- 66: Achsstange
- 68: Pneumatikzylinder
- 70: Schwenkachskörper
- 72: Wendelförmige Nut
- 74: Hülse
- I: Betriebsstellung
- II: Verstaustellung
- A: Abstand
- [A]: Muldentiefe
- AUK: Abstandsmaß der unteren Kontur UK
- B: Breite des oberseitigen Luftleitflügels 12
- E: Einzugslänge
- EB: Einbuchtung
- EBOE: oberes Ende der Einbuchtung EB
- EBUE: unteres Ende der Einbuchtung EB
- H: Höhe
- HKA: hinterer Kantenabschnitt
- HKA₁: unteres Segment des hinteren Kantenabschnitts HKA
- HKA₂: oberes Segment des hinteren Kantenabschnitts HKA
- KM: Kontur modifiziert
- KU: Kontur ursprünglich
- L: Länge
- LA: lateraler Abschnitt
- LR: Längsrand
- MU: Mulde
- OK: obere Kante
- OKA: oberste Kante
- PA: Punkt der Ablösung
- R: Rechteck
- UK: untere Kontur
- UKA: unterste Kante
- QR: Querrand
- SA: seitlicher Abstand
- SK: seitliche Kontur
- Z: Zwischenstellung

## Patentansprüche

1. Strömungsführungsvorrichtung für ein Fahrzeug (1), insbesondere für einen Lastkraftwagen, die wenigstens einen in einer Betriebsstellung in Konturverlängerung an einer heckseitigen Fahrzeugkante (52) anordnenbaren und eine Luftleitfläche ausbildenden Luftleitflügel (10, 12) umfasst, der mittels einer Verstelleinrichtung zwischen der Betriebsstellung (I) und einer Verstaustellung (II) um eine Verschwenkachse verschwenkbar angeordnet ist,
**dadurch gekennzeichnet,**
**dass** der Luftleitflügel (10, 12) wenigstens ein Luftleitelement (14, 18) und wenigstens ein relativ zu dem Luftleitelement (14, 18) parallel zu der Verschwenkachse translatorisch bewegliches Schiebeelement (16, 20) umfasst.

2. Strömungsführungsvorrichtung für ein Fahrzeug (1) nach Anspruch 1, **dadurch gekennzeichnet, dass** das Schiebeelement (16, 20) auf dem Luftleitelement (14, 18) translatorisch beweglich montiert ist.

3. Strömungsführungsvorrichtung für ein Fahrzeug (1) nach Anspruch 1 oder 2, **gekennzeichnet durch** zwei seitliche Luftleitflügel (10) zur Strömungsführung an gegenüberliegenden Seitenflächen (4) des Fahrzeugs (1) und einen oberseitigen Luftleitflügel (12) zur Strömungsführung an einer Dachfläche (2) des Fahrzeugs (1), wobei der oberseitige Luftleitflügel (12) zumindest zwei Luftleitelemente (14) und zumindest zwei Schiebeelemente (16) umfasst.

4. Strömungsführungsvorrichtung nach Anspruch 3, **dadurch gekennzeichnet, dass** die seitlichen Luftleitflügel (10) jeweils über einen Schwenkachskörper (70) anhebbar sind, der in einer mit einer wendelförmigen Nut (72) versehenen Hülse (74) aufgenommen ist, die von einer mit dem Schwenkachskörper (70) und dem jeweiligen Luftleitflügel (10) verbundenen Gelenkstange (42) durchragt ist.

5. Strömungsführungsvorrichtung für ein Fahrzeug (1) nach Anspruch 4, **dadurch gekennzeichnet, dass** der oberseitige Luftleitflügel (12) gegenüber einer Mittellängsachse (62) geteilt und spiegelsymmetrisch hierzu ausgebildet ist.

6. Strömungsführungsvorrichtung für ein Fahrzeug (1) nach einem der vorherigen Ansprüche, **gekennzeichnet durch** wenigstens eine Montageplatte (54), auf der der Luftleitflügel (10, 12) verschwenkbar und mit einem Aktuator montiert ist.

7. Strömungsführungsvorrichtung für ein Fahrzeug (1) nach Anspruch 3 , **gekennzeichnet dass** in der Betriebsstellung (I) benachbart zueinander angeordnete Schiebeelemente (16, 20) einen Eckbereich (22) ausbilden.

8. Strömungsführungsvorrichtung für ein Fahrzeug nach Anspruch 3 , **dadurch gekennzeichnet, dass** die Versteiteinrichtung wenigstens ein Gliedergetriebe (38, 40, 42, 46, 48, 50) umfasst, das derart ausgebildet ist, dass eine vordere Kante (36) des seitlichen Luftleitflügels (10) oder des oberen Luftleitflügels (12) in der Verstaustellung (II) gegenüber der Betriebsstellung (I) nach innen versetzt angeordnet ist.

9. Strömungsführungsvorrichtung für ein Fahrzeug nach einem der vorherigen Ansprüche, **dadurch gekennzeichnet, dass** der Luftleitflügel (10, 12) eine Außenfläche (32) hat, die in einer Querschnittsansicht an einer vorderen Kante (36) des Luftleitflügels (10, 12) eine Tangente an einen Längsrand (LR) eines Rechtecks (R) bildet und im Eckpunkt dieses Längsrandes (LR) mit einem Querrand (QR) dieses Rechtecks (R) liegt, in dessen gegenüberliegenden Eckpunkt eine hintere Kante (44) des Luftleitflügels (10, 12) liegt, wobei die Außenfläche (32) zwischen der vorderen und der hinteren Kante (36, 44) konvex gekrümmt ist und der Längsrand (LR) des Rechtecks (R) eine Länge (L) von zwischen 350 und 700 mm, bevorzugt von zwischen 400 und 600 mm hat und der Querrand (QR) eine Einzugslänge (E) von zwischen 0,2 und 0,3, bevorzugt von zwischen 0,22 und 0,24 der Länge (L) des Längsrandes (LR) hat.

10. Strömungsführungsvorrichtung für ein Fahrzeug (1) nach Anspruch 3 , **gekennzeichnet durch** eine im geradlinig verlaufenden hinteren Kantenabschnitt (HKA) abgehende Einbuchtung (EB), die im oberen Bereich des seitlichen Luftleitflügels (10) vorgesehen ist.

11. Strömungsführungsvorrichtung für ein Fahrzeug (1) nach Anspruch 3 , **dadurch gekennzeichnet, dass** der oberseitige Luftleitflügel (12) im Betriebszustand (I) eine symmetrisch zu der Mittellängsachse (62) ausgeformte Mulde (MU) ausbildet, die gegenüber geradlinig verlaufenden lateralen Abschnitten (LA) der hinteren Kante (44) des oberseitigen Luftleitflügels (12) zurückgenommen ausgebildet ist.

12. Strömungsführungsvorrichtung für ein Fahrzeug (1) nach einem der vorherigen Ansprüche, **gekennzeichnet durch** eine Steuereinheit, welche ein Mittel zum Bestimmen der Geschwindigkeit des Fahrzeuges (1) und ein Mittel zum Generieren von Steuerwerten zum Ansteuern der Verstelleinrichtung umfasst, wobei das Mittel zum Generieren von Steuerwerten derart ausgebildet ist, dass die Steuereinheit nach Überschreiten einer ersten Grenzgeschwindigkeit ein den Luftleitflügel (10, 12) von der Verstaustellung (II) in die Betriebsstellung (I) stellendes Aufstellsignal absetzt und beim Unterschreiten einer zweiten Grenzgeschwindigkeit ein den Luftleitflügel von der Betriebsstellung (I) in die Verstaustellung zurückstellendes Verstaustellsignal absetzt.

13. Strömungsführungsvorrichtung für ein Fahrzeug (1) nach Anspruch 12, **dadurch gekennzeichnet, dass** die Steuereinrichtung ein Verzögerungsmodul hat, welches das Absetzen eines Aufstell- bzw. Verstaustellsignals über einen vorbestimmten Zeitraum unterbindet, sofern während dieses Zeitraums die erste Grenzgeschwindigkeit unterschritten bzw. die zweite Grenzgeschwindigkeit überschritten wird.

14. Strömungsführungsvorrichtung für ein Fahrzeug (1) nach einem der vorherigen Ansprüche, **dadurch gekennzeichnet, dass** in der Betriebsstellung (I) der vorderen Kante (36) des Luftleitflügels (10, 12) vorgelagert von einer Außenfläche (2, 4) des Fahrzeugs (1) abragende, in Längsrichtung (LR) einer vorderen Kante (36) hintereinander angeordnete Vorsprünge abragen.

15. Fahrzeug (1), insbesondere LKW, LKW-Auflieger, LKW-Anhänger oder Kleintransporter, speziell in der Ausführung Pritsche mit Plane, Kasten, Container- oder Tier-transporter, **gekennzeichnet durch** eine Strömungsführungsvorrichtung nach einem der Ansprüche 1 bis 14, die in der Betriebsstellung (I) mit ihrer vorderen Kante im Wesentlichen Kontur verlängernd zu einer heckseitigen Fahrzeugkante (52) angeordnet ist.

## Claims

1. Flow control device for a vehicle (1), especially for a truck, that comprises at least one air deflector blade (10, 12) that can be arranged in an operating position as a contour extension on a rear vehicle end (52), that forms an air deflector area and that is installed in a way as to be flexibly tiltable around a swivel axis by means of an adjustment unit between the operating position (I) and a stowing position (II),
**characterized in**
**that** the air deflector blade (10, 12) comprises at least one air deflector element (14, 18) and at least one flexible sliding element (16, 20) that can be moved translationally in relation to the air deflector element (14, 18) in parallel to the swivel axis.

2. Flow control device for a vehicle (1) according to Claim 1, **characterized in that** the sliding element (16, 20) installed on the air deflector element (16, 20) can be moved translationally.

3. Flow control device for a vehicle (1) according to Claim 1 or 2, **characterized by** two lateral air deflector blades (10) for the flow control on opposite lateral areas (4) of the vehicle (1) and one top-side air deflector blade (12) for the flow control on a roof area (2) of the vehicle (1), whereby the top-side air deflector blade (12) comprises at least two air deflector elements (14) and at least two sliding elements (16).

4. Flow control device according to Claim 3, **characterized in that** at least one of the air deflector blades (10) can be lifted by means of a swivel axis body (70), which is enclosed by a sleeve (74) equipped with a helical groove (72) that is penetrated by a joint rod (42) connected to the swivel axis body (70) and the respective air deflector blade (10).

5. Flow control device for a vehicle (1) according to Claim 4, **characterized in that** the top-side air deflector blade (12) is divided opposite to a central longitudinal axis (62) and developed in a mirror-symmetric position to the latter.

6. Flow control device for a vehicle (1) according to one of the preceding claims, **characterized by** at least one assembly plate (54) on which the air deflector blade (10, 12) is installed tiltably and with an actuator.

7. Flow control device for a vehicle (1) according to claim 3, **characterized in that** sliding elements (16, 20), that are adjacent to each other, form a corner area (22) in the operating position (I).

8. Flow control device for a vehicle according to claim 3, **characterized in that** the adjustment unit comprises at least one articulation gear (38, 40, 42, 46, 48, 50), which is developed in such a way that the a front edge (36) of the lateral air deflector blade (10) or of the upper air deflector blade (12) is offset towards the inside in the stowing position (II) in relation to the operating position (I).

9. Flow control device for a vehicle according to one of the preceding claims, **characterized in that** the air deflector blade (10, 12) has an outer area (32) which forms, in a cross-section view, a tangent on a longitudinal edge (LR) of a rectangle (R) at a front edge (36) of the air deflector blade (10, 12) and which is located in the corner point of this longitudinal edge (LR) with a transversal edge (QR) of this rectangle (R) in whose opposite corner point there is a rear edge (44) of the air deflector blade (10, 12), whereby the outer surface (32) between the front and the rear edge (36, 44) is convex curved and whereby the longitudinal edge (LR) of the rectangle (R) has a length (L) of between 350 and 700 mm, preferably of between 400 and 600 mm, and whereby the transversal edge (QR) has a feed length (E) of between 0.2 and 0.3, preferably of between 0.22 and 0.24 of the length (L) of the longitudinal edge (LR).

10. Flow control device for a vehicle (1) according to according to claim 3, **characterized by** an indentation (EB) extending away in the linear rear edge section (HKA), which is installed in the upper area of the lateral air deflector blade (10).

11. Flow control device for a vehicle (1) according to according to claim 3, **characterized in that** the top-side air deflector blade (12) develops a trough (MU) that is symmetric to the central longitudinal axis (62) in the operating mode (I) and that is formed as a recess in relation to linear lateral sections (LA) of the rear edge (44) of the top-side air deflector blade (12).

12. Flow control device for a vehicle (1) according to one of the preceding claims, **characterized by** a control unit that comprises a mechanism to determine the speed of a vehicle (1) and a mechanism to generate control values to trigger the adjustment unit, whereby the mechanism to generate control values is developed in a way that the control unit sets off a positioning signal that puts the air deflector blade (10, 12) from the stowing position (II) to the operating position (I) after the first speed limit is exceeded and that set off a reset stowing signal which puts the air deflector blade from the operating position (I) back to the stowing position when a second speed limit is undercut.

13. Flow control device for a vehicle (1) according to Claim 12, **characterized in that** the control unit has a delay module that prevents the transmission of a positioning and/or reset signal during a predefined period if the first speed limit is undercut and/or if the second speed limit is exceeded during that period.

14. Flow control device for a vehicle (1) according to one of the preceding claims, **characterized in that** in the operating position (I) protrusions located in front of the front edge (36) of the air deflector blade (10, 12) extend away from an outer surface (2, 4) of the vehicle (1) and are arranged in a row in longitudinal direction (LR) of a front edge (36).

15. Vehicle (1), especially truck, semi-trailer, trailer or small van, particularly designed as a canvas-covered flatbed, box, container or livestock truck, **characterized by** a flow control device according to one of the claims 1 to 14 whose front edge is essentially installed in a way that it prolongs the contour of a rear vehicle edge (52) in the operating position.

## Revendications

1. Dispositif aérodynamique de canalisation de l'écoulement d'air pour un véhicule (1), notamment pour un poids lourd, comprenant au moins un aileron de guidage d'air (10, 12), qui, dans une position de fonctionnement, peut être disposé en prolongement du contour au niveau d'un bord arrière de véhicule (52), et forme une surface de guidage d'air, et qui est agencé de manière à pouvoir pivoter autour d'un axe de pivotement, au moyen d'un dispositif de réglage, entre la position de fonctionnement (I) et une position escamotée (II), **caractérisé en ce que** l'aileron de guidage d'air (10, 12) comprend au moins un élément de guidage d'air (14, 18), ainsi qu'au moins un élément coulissant (16, 20) mobile en translation par rapport à l'élément de guidage d'air (14, 18), parallèlement à l'axe de pivotement.

2. Dispositif aérodynamique de canalisation d'un écoulement d'air pour un véhicule (1) selon la revendication 1, **caractérisé en ce que** l'élément coulissant (16, 20) est monté mobile en translation sur l'élément de guidage d'air (14, 18).

3. Dispositif aérodynamique de canalisation d'un écoulement d'air pour un véhicule (1) selon la revendication 1 ou la revendication 2, **caractérisé par** deux ailerons de guidage d'air latéraux (10) pour le guidage de l'écoulement d'air sur des surfaces latérales opposées (4) du véhicule (1), et par un aileron de guidage d'air supérieur (12) pour le guidage de l'écoulement d'air au niveau d'une surface de toit (2) du véhicule (1), l'aileron de guidage d'air supérieur (12) comportant au moins deux éléments de guidage d'air (14) et au moins deux éléments coulissants (16).

4. Dispositif aérodynamique de canalisation d'un écoulement d'air selon la revendication 3, **caractérisé en ce que** les ailerons de guidage d'air latéraux (10) peuvent être soulevés, chacun par l'intermédiaire d'un corps d'axe de pivotement (70), qui est logé dans un fourreau (74) muni d'une rainure en hélice (72) traversée par une tige d'articulation (42) reliée au corps d'axe de pivotement (70) et à l'aileron de guidage d'air (10) respectif.

5. Dispositif aérodynamique de canalisation d'un écoulement d'air pour un véhicule (1) selon la revendication 4, **caractérisé en ce que** l'aileron de guidage d'air supérieur (12) est divisé relativement à un axe longitudinal médian (62) et est de configuration symétrique par rapport à celui-ci.

6. Dispositif aérodynamique de canalisation d'un écoulement d'air pour un véhicule (1) selon l'une des revendications précédentes, **caractérisé par** au moins une plaque de montage (54) sur laquelle l'aileron de guidage d'air (10, 12) est monté pivotant et avec un actionneur.

7. Dispositif aérodynamique de canalisation d'un écoulement d'air pour un véhicule (1) selon la revendication 3, **caractérisé en ce que** des éléments coulissants (16, 20) agencés de manière mutuellement voisine dans la position de fonctionnement (I), forment une zone de coin (22).

8. Dispositif aérodynamique de canalisation d'un écoulement d'air pour un véhicule selon la revendication 3, **caractérisé en ce que** le dispositif de réglage comprend au moins une transmission à tiges (38, 40, 42, 46, 48, 50), qui est configurée de manière à ce qu'un bord avant (36) de l'aileron de guidage d'air latéral (10) ou de l'aileron de guidage d'air supérieur (12) soit, dans la position escamotée (II), agencé de manière décalée vers l'intérieur par rapport à la position de fonctionnement (I).

9. Dispositif aérodynamique de canalisation d'un écoulement d'air pour un véhicule selon l'une des revendications précédentes, **caractérisé en ce que** l'aileron de guidage d'air (10, 12) possède une surface extérieure (32) qui, dans une vue en section transversale, forme au niveau d'un bord avant (36) de l'aileron de guidage d'air (10, 12), une tangente à un côté longitudinal (LR) d'un rectangle (R), et se situe au sommet formé à l'intersection de ce côté longitudinal (LR) et d'un côté transversal (QR) de ce rectangle (R), au sommet opposé duquel se situe un bord arrière (44) de l'aileron de guidage d'air (10, 12), et **en ce que** la surface extérieure (32) est courbée de manière convexe entre les bords avant et arrière (36, 44), et le côté longitudinal (LR) du rectangle (R) possède une longueur (L) entre 350 et 700 mm, de préférence entre 400 et 600 mm, et le côté transversal (QR) présente une longueur de retrait (E) entre 0,2 et 0,3, de préférence entre 0,22 et 0,24 fois la longueur (L) du côté longitudinal (LR).

10. Dispositif aérodynamique de canalisation d'un écoulement d'air pour un véhicule (1) selon la revendication 3, **caractérisé par** une encoche (EB) issue du tronçon de bord arrière (HKA) s'étendant de manière rectiligne, et prévue dans la zone supérieure de l'aileron de guidage d'air latéral (10).

11. Dispositif aérodynamique de canalisation d'un écoulement d'air pour un véhicule (1) selon la revendication 3, **caractérisé en ce que** l'aileron de guidage d'air supérieur (12) forme, dans l'état de fonctionnement (I), une cavité (MU) formée de manière symétrique par rapport à l'axe longitudinal médian (62) et en retrait par rapport à des tronçons latéraux (LA) du bord arrière (44) de l'aileron de guidage d'air supérieur (12), qui s'étendent de manière rectiligne.

12. Dispositif aérodynamique de canalisation d'un écoulement d'air pour un véhicule (1) selon l'une des revendications précédentes, **caractérisé par** une unité de commande, qui comprend un moyen pour déterminer la vitesse du véhicule (1) et un moyen pour produire des valeurs de commande pour commander le dispositif de réglage, le moyen pour produire des valeurs de commande étant conçu de manière telle que l'unité de commande, après dépassement d'une première vitesse de seuil, délivre un signal de déploiement déplaçant l'aileron de guidage d'air (10, 12) de la position escamotée (II) à la position de fonctionnement (I), et lorsque la vitesse passe en-dessous d'une deuxième vitesse de seuil, délivre un signal d'escamotage ramenant l'aileron de guidage d'air de la position de fonctionnement (I) à la position escamotée.

13. Dispositif aérodynamique de canalisation d'un écoulement d'air pour un véhicule (1) selon la revendication 12, **caractérisé en ce que** le dispositif de commande possède un module de temporisation, qui entrave la délivrance d'un signal de déploiement respectivement d'un signal d'escamotage pendant un intervalle de temps prédéterminé, dans la mesure où pendant cet intervalle de temps, on passe sous la première vitesse de seuil, ou respectivement la deuxième vitesse de seuil est dépassée.

14. Dispositif aérodynamique de canalisation d'un écoulement d'air pour un véhicule (1) selon l'une des revendications précédentes, **caractérisé en ce que** des protubérances sont agencées en saillie d'une surface extérieure (2, 4) du véhicule (1), en amont du bord avant (36) de l'aileron de guidage d'air (10, 12) en position de fonctionnement (I), en étant disposées les unes à la suite des autres dans la direction longitudinale (LR) du bord avant (36).

15. Véhicule (1), notamment poids lourd, semi-remorque, remorque de poids lourd ou camion de transport de petit gabarit, notamment sous la forme à plateau bâché, à caisson, ou sous la forme de camion à conteneur ou de transport de bétail, **caractérisé par** un dispositif aérodynamique de canalisation d'un écoulement d'air selon l'une des revendications 1 à 14, qui, dans la position de fonctionnement (I), est agencé avec son bord avant sensiblement en prolongement du contour d'un bord arrière de véhicule (52).
